(19) Europäisches Patentamt
European Patent Office
Office européen des brevets

(11) **EP 4 718 563 A1**

(12) **EUROPEAN PATENT APPLICATION**
published in accordance with Art. 153(4) EPC

(43) Date of publication:
01.04.2026 Bulletin 2026/14

(21) Application number: 24822528.6

(22) Date of filing: 27.05.2024

(51) International Patent Classification (IPC):
*H01M 10/0567* (2010.01)    *H01M 10/054* (2010.01)
*H01M 10/42* (2006.01)

(52) Cooperative Patent Classification (CPC):
H01M 10/054; H01M 10/0567; H01M 10/058;
H01M 10/42; Y02E 60/10

(86) International application number:
PCT/CN2024/095448

(87) International publication number:
WO 2024/255576 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.06.2023 CN 202310710192

(71) Applicant: Huawei Technologies Co., Ltd.
Shenzhen, Guangdong 518129 (CN)

(72) Inventors:
• MA, Qiang
Shenzhen, Guangdong 518129 (CN)
• XU, Xiaodong
Shenzhen, Guangdong 518129 (CN)
• ZHANG, Yezheng
Shenzhen, Guangdong 518129 (CN)
• HOU, Tianhong
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **SODIUM-ION BATTERY AND ELECTRICAL DEVICE**

(57) A sodium-ion battery, a preparation method for the sodium-ion battery, and a power consumption device including the sodium-ion battery are disclosed. The sodium-ion battery includes a positive electrode, a negative electrode, an electrolyte, and a separator. The negative electrode includes a carbon material, and a specific surface area of the carbon material is a in a unit of $m^2/g$. The electrolyte includes an electrolyte salt, an organic solvent, and an additive, the additive includes a sodium salt additive and an organic additive, a mass percentage of the sodium salt additive in the electrolyte is e in a unit of %, a numerical ratio of e to a satisfies: $0.01 \leq e/a \leq 3.5$, a mass percentage of the organic additive in the electrolyte is f in a unit of %, and a numerical ratio of f to a satisfies: $0.05 \leq f/a \leq 10$. In the sodium-ion battery, a proper amount of the additive required in the electrolyte is determined based on physicochemical properties of an electrode material, and an appropriate amount of sodium salt additive and an appropriate amount of organic additive are added to the electrolyte, to better improve battery performance.

FIG. 1

**Description**

This application claims priority to Chinese Patent Application No. 202310710192.4, filed with the China National Intellectual Property Administration on June 14, 2023 and entitled "SODIUM-ION BATTERY AND POWER CONSUMPTION DEVICE", which is incorporated herein by reference in its entirety.

TECHNICAL FIELD

Embodiments of this application relate to the field of sodium-ion battery technologies, and in particular, to a sodium-ion battery and a power consumption device.

BACKGROUND

Sodium-ion batteries are considered as a highly promising candidate in energy storage scenarios for their abundant sodium resources and low costs. However, currently, the sodium-ion batteries have disadvantages such as poor cycle performance, high-temperature storage, and circulating gas expansion, which restrict their wide application. Performance of the sodium-ion battery mainly depends on a positive electrode material, a negative electrode material, and an electrolyte. Additives are usually added to the electrolyte, to improve electrochemical performance of the electrolyte and improve negative electrode deposition quality. A sodium-ion battery with sodium nickel iron manganese oxide as a positive electrode material and hard carbon as a negative electrode material is used as an example. A common additive in the electrolyte forms an SEI (Solid Electrolyte Interphase, solid electrolyte interface) film at a stage of formation or capacity grading to cover a surface of a hard carbon negative electrode, and the additive is almost depleted at this stage. However, the SEI film of the sodium-ion battery has poor stability, and the SEI film cannot be effectively repaired subsequently. In addition, because the additive is almost depleted, a CEI (Cathode Electrolyte Interphase, cathode electrolyte interface) film cannot be effectively formed and repaired at a positive electrode, affecting long cycle performance and high-temperature performance of a battery system.

SUMMARY

In view of this, embodiments of this application provide a sodium-ion battery. An electrolyte of the sodium-ion battery includes a specific additive, to improve film formation quality on a surface of a negative electrode, effectively avoid continuous rupture and dissolution of an SEI film in a cycle process, and reduce a side reaction. In addition, an effective CEI film is formed on a surface of a positive electrode, to suppress dissolution of metal ions of the positive electrode, so as to improve cycle performance and high- and low-temperature storage performance of the battery and reduce gas generation.

Specifically, a first aspect of embodiments of this application provide a sodium-ion battery. The sodium-ion battery includes a positive electrode, a negative electrode, an electrolyte, and a separator. The negative electrode includes a negative electrode active material, the negative electrode active material includes a carbon material, a specific surface area of the carbon material is a in a unit of $m^2/g$, the electrolyte includes an electrolyte salt, an organic solvent, and an additive, the additive includes a sodium salt additive and an organic additive, a mass percentage of the sodium salt additive in the electrolyte is e in a unit of %, a numerical ratio of e to a satisfies: $0.01 \leq e/a \leq 3.5$, a mass percentage of the organic additive in the electrolyte is f in a unit of %, and a numerical ratio of f to a satisfies: $0.05 \leq f/a \leq 10$.

It should be noted that the numerical ratio of e to a is a ratio of e to a without considering a unit. For example, if e is 1% and a is 0.5 $m^2/g$, the numerical ratio of e to a is $e/a=1/0.5=2$.

Similarly, the numerical ratio of f to a is a ratio of f to a without considering a unit. For example, if f is 2% and a is 0.5 $m^2/g$, the numerical ratio of f to a is $f/a=2/0.5=4$.

In the sodium-ion battery in embodiments of this application, two types of additives: the sodium salt additive and the organic additive, are added to the electrolyte, and a ratio of addition amounts of the two types of additives to the specific surface area of the negative electrode carbon material is controlled within an appropriate range, so that a proper amount of additive is selected based on the specific surface area of the negative electrode carbon material, to guide design of matching between the electrode material and the electrolyte. This avoids a problem that due to an improper amount of the additive in the electrolyte, a side reaction between the electrolyte and the electrode material cannot be effectively reduced and an internal resistance cannot be effectively reduced, better achieves a good balance between performance of the carbon material and a function of the additive, and further better ensures electrochemical performance of the battery. The sodium salt additive may react with the negative electrode earlier than the organic additive, to passivate a surface of the negative electrode, so that film formation quality of the organic additive on the surface of the negative electrode is improved. This effectively avoids continuous rupture and dissolution of an SEI film in a cycle process, reduces contact between the negative electrode and the electrolyte, and reduces a probability of the side reaction. In addition, the battery can have an appropriate amount of additive to form an effective CEI film on a surface of the positive electrode, so as to suppress dissolution of metal ions of the positive electrode. In addition, addition of an appropriate amount of sodium salt additive can further reduce a consumption amount and a consumption speed of the organic additive, improve cycle performance of the battery, improve high- and low-temperature storage performance, and reduce gas generation of the battery.

In an implementation of this application, the mass percentage of the sodium salt additive in the electrolyte ranges from 0.05% to 3%. The appropriate amount of sodium salt additive is added to the electrolyte, so that the surface of the negative electrode can be better passivated, film formation quality of the SEI film of the negative electrode can be improved, and the SEI film can be effectively repaired in a battery cycle process. In addition, it is more conducive to forming an effective CEI film on the surface of the positive electrode of the battery in the cycle process, to better improve long cycle performance of the battery. Addition of the appropriate amount of sodium salt additive can further reduce a consumption amount and a consumption speed of the organic additive, improve high- and low-temperature storage performance of the battery, and reduce gas generation of the battery.

In an implementation of this application, the organic additive includes fluorocarbonate, and a mass percentage of the fluorocarbonate in the electrolyte ranges from 0.1% to 10%. The fluorocarbonate has low lowest unoccupied molecular orbital (LUMO) energy, and is easy to be reduced earlier than another electrolyte solvent. The fluorocarbonate used as an organic additive can form a highly crystalline SEI film rich in an inorganic component on the surface of the negative electrode of the sodium-ion battery, to effectively protect the negative electrode and ensure uniform and rapid migration of sodium ions at an interface. An amount of the fluorocarbonate is controlled within the foregoing range. This can better exploit film formation advantages of the fluorocarbonate, and better improve cycle performance of the battery.

In the electrolyte, the mass percentage e of the sodium salt additive and the mass percentage f of the fluorocarbonate directly affect film formation performance of the positive or negative electrode of the sodium-ion battery. In this implementation of this application, the numerical ratio of e to f satisfies: $0.01 \leq e/f \leq 8$, to better form a film on the surface of the positive or negative electrode, so as to improve battery performance.

In an implementation of this application, the specific surface area of the carbon material ranges from 0.5 $m^2$/g to 15 $m^2$/g. The negative electrode carbon material has an appropriate specific surface area, so that the negative electrode has a better capability of receiving and releasing sodium ions, and the battery has better dynamic performance. In addition, that the negative electrode carbon material has the appropriate specific surface area means that a stable SEI film can be formed by adding an appropriate amount of additive, to avoid an improper amount of the additive.

In an implementation of this application, the sodium salt additive includes one or more of sodium bis(oxalato) borate (NaBOB), sodium difluoro(oxalato)borate (NaDFOB), sodium difluorodioxalate phosphate (NaDFOP), and sodium difluorophosphate ($NaPO_2F_2$). The foregoing sodium salt additive has a high reduction and film formation potential, and can react with the negative electrode earlier than the organic additive, to passivate the surface of the negative electrode. This improves film formation quality of the organic additive on the surface of the negative electrode, effectively avoids continuous rupture and dissolution of the SEI film in a cycle process, reduces contact between the negative electrode and the electrolyte, and reduces a probability of a side reaction.

In an implementation of this application, the fluorocarbonate includes at least one of fluoroethylene carbonate (FEC) and difluoroethylene carbonate (DFEC). The foregoing two types of fluorocarbonate have good film formation performance on the surface of the electrode, can effectively protect the electrode, and ensure uniform and rapid migration of sodium ions at an interface between the electrode and the electrolyte, thereby improving dynamic performance and cycle performance of the battery.

In an implementation of this application, the positive electrode includes a positive electrode active material, and the positive electrode active material includes at least one of a layered sodium transition metal oxide, a Prussian blue (white) compound, and a sodium polyanion compound. The positive electrode active material may be one of or a combination of the foregoing materials. Each of the layered sodium transition metal oxide positive electrode material and the Prussian blue (white) compound positive electrode material has a high specific capacity. The sodium polyanion compound has high electrochemical reaction stability.

In some implementations of this application, the positive electrode active material includes the layered sodium transition metal oxide, a specific surface area of the layered sodium transition metal oxide ranges from 0.1 $m^2$/g to 1.0 $m^2$/g, and is denoted as b, and a numerical ratio of e to b satisfies: $0.1 \leq e/b \leq 15$. The specific surface area of the layered sodium transition metal oxide is controlled within an appropriate range. This helps better balance rate performance of the battery and cycle and storage performance of the battery. The numerical ratio of the mass percentage e of the sodium salt additive to the specific surface area b of the layered sodium transition metal oxide of the positive electrode active material is controlled within an appropriate range, to better achieve a good balance between performance of the layered sodium transition metal oxide and a function of the additive, and better improve battery performance.

In an implementation of this application, a mass percentage of the layered sodium transition metal oxide in a positive electrode material layer is greater than or equal to 92%, a specific capacity of the layered sodium transition metal oxide material at 0.1C is greater than or equal to 100 mAh/g, and a compaction density of the positive electrode ranges from 2.9 $g/cm^3$ to 3.6 $g/cm^3$. A mass content of the layered sodium transition metal oxide in the positive electrode material layer is controlled at a high proportion. This helps improve battery capacity. A positive electrode active material with a high capacity is selected. This helps improve overall capacity of the battery and improve charge and discharge performance. An appropriate compaction density of the positive electrode helps the battery have good other performance while obtaining a high energy density.

In some other implementations of this application, the positive electrode active material includes the Prussian blue (white) compound, a specific surface area of the Prussian blue (white) compound ranges from 0.1 $m^2$/g to 1.0 $m^2$/g, and is denoted as c, and a numerical ratio of e to c satisfies: $0.1 \leq e/c \leq 15$. The specific surface area of the positive electrode active material is controlled within an appropriate range. This helps better balance rate performance of the battery and cycle and storage performance of the battery. The numerical ratio of the mass percentage e of the sodium salt additive to the specific surface area c of the Prussian blue (white) compound of the positive electrode active material is controlled within an appropriate range, to better achieve a good balance between performance of the Prussian blue (white) compound and a function of the additive, and better improve battery performance.

In an implementation of this application, a mass percentage of the Prussian blue (white) compound in a positive electrode material layer is greater than or equal to 92%, a specific capacity of the Prussian blue (white) compound material at 0.1C is greater than or equal to 130 mAh/g, and a compaction density of the positive electrode ranges from 1.2 g/cm$^3$ to 1.8 g/cm$^3$. A mass content of the Prussian blue (white) compound in the positive electrode material layer is controlled at a high proportion. This helps improve battery capacity. A positive electrode active material with a high capacity is selected. This helps improve overall capacity of the battery and improve charge and discharge performance. An appropriate compaction density of the positive electrode helps the battery have good other performance while obtaining a high energy density.

In some other implementations of this application, the positive electrode active material includes the sodium polyanion compound, a specific surface area of the sodium polyanion compound ranges from 5 $m^2$/g to 25 $m^2$/g, and is denoted as d, and a numerical ratio of e to d satisfies: $0.005 \leq e/d \leq 0.4$. The specific surface area of the positive electrode active material is controlled within an appropriate range. This helps better balance rate performance of the battery and cycle and storage performance of the battery. The numerical ratio of the mass percentage e of the sodium salt additive to the specific surface area d of the sodium polyanion compound of the positive electrode active material is controlled within an appropriate range, to better achieve a good balance between performance of the sodium polyanion compound and a function of the additive, and better improve battery performance.

In an implementation of this application, a mass percentage of the sodium polyanion compound in a positive electrode material layer is greater than or equal to 92%, a specific capacity of the sodium polyanion compound material at 0.1C is greater than or equal to 100 mAh/g, and a compaction density of the positive electrode ranges from 1.8 g/cm$^3$ to 2.8 g/cm$^3$. A mass content of the sodium polyanion compound in the positive electrode material layer is controlled at a high proportion. This helps improve battery capacity. A positive electrode active material with a high capacity is selected. This helps improve overall capacity of the battery and improve charge and discharge performance. An appropriate compaction density of the positive electrode helps the battery have good other performance while obtaining a high energy density.

In an implementation of this application, a specific capacity of the carbon material at 0.1C is greater than or equal to 230 mAh/g. A carbon material with a high capacity is selected as the negative electrode active material. This helps improve overall capacity of the battery and improve charge and discharge performance.

In an implementation of this application, the carbon material includes at least one of natural graphite, artificial graphite, a mesocarbon microbead (MCMB), hard carbon, soft carbon, and a porous carbon material. The negative electrode of the sodium-ion battery in this application may include one or more of the foregoing carbon materials.

In an implementation of this application, a mass percentage of the carbon material in a negative electrode material layer is greater than or equal to 93%, and a compaction density of the negative electrode ranges from 0.9 g/cm$^3$ to 1.6 g/cm$^3$. An appropriate compaction density of the negative electrode helps the battery have good other performance while obtaining a high energy density.

In an implementation of this application, the electrolyte further includes one or more of a sulfur-containing ester compound, a nitrile compound, and an acid anhydride compound. The sulfur-containing ester compound may form a high-quality interface film on a surface of the positive or negative electrode material, to improve high-temperature performance of the sodium-ion battery, and suppress gas generation. The nitrile compound may complex transition metal ions in the positive electrode material, to reduce catalytic activity of the transition metal ions, reduce dissolution of the transition metal ions, and improve oxidation resistance of the electrolyte. The acid anhydride compound may form a film on the surface of the positive or negative electrode material, to reduce a problem caused by high alkalinity of the positive electrode material.

In an implementation of this application, a mass percentage of the sulfur-containing ester compound in the electrolyte ranges from 1% to 5%, a mass percentage of the nitrile compound in the electrolyte ranges from 1% to 6%, and a mass percentage of the acid anhydride compound in the electrolyte ranges from 0.05% to 1%. The foregoing different additives are controlled to appropriate contents. This does not reduce other performance of the battery while achieving beneficial effect.

In an implementation of this application, the sulfur-containing ester compound includes but is not limited to one or more of dimethyl sulfite, diethyl sulfite, vinyl sulfite, ethylene sulfate, propylene sulfate, methylene methanedisulfonate, 1,3-propanesultone, 1,3-propene sultone, 1,4-butane sultone, dimethyl sulfate, diethyl sulfate, and propane 1,2-cyclic sulfate.

In an implementation of this application, the nitrile compound includes a mononitrile compound and/or a polynitrile compound. In some implementations, the mononitrile compound includes but is not limited to at least one of acetonitrile and p-tolunitrile. In some implementations, the polynitrile compound includes but is not limited to one or more of succinonitrile, glutaronitrile, adiponitrile, 1,2-bis(2-cyanoethoxy)ethane, and 1,3,6-hexanetricarbonitrile.

In an implementation of this application, the acid anhydride compound includes but is not limited to one or more of succinic anhydride, glutaric anhydride, adipic anhydride, maleic anhydride, and cyclic phosphoric anhydride.

In an implementation of this application, the electrolyte salt includes but is not limited to one or more of $NaClO_4$, $NaBF_4$, $NaPF_6$, $NaAsF_6$, $NaCF_3SO_3$, NaTDI, $Na[(CF_3SO_2)_2N]$, $Na[(FSO_2)_2N]$, and $Na[(C_nF_{2m+1}SO_2)(C_nF_{2n+1}SO_2)N]$, where m and n are natural numbers.

In an implementation of this application, a molar concentration of the electrolyte salt in the electrolyte ranges from 0.01 mol/L to 5.0 mol/L.

In an implementation of this application, the organic solvent includes one or more of a carbonate solvent, an ether solvent, and a carboxylate solvent.

A second aspect of embodiments of this application provides a preparation method for a sodium-ion battery, including:

providing a positive electrode sheet, a negative electrode sheet, a separator, and an electrolyte, where the negative electrode sheet includes a negative electrode active material, the negative electrode active material includes a carbon material, a specific surface area of the carbon material is a in a unit of $m^2/g$, the electrolyte includes an electrolyte salt, an organic solvent, and an additive, the additive includes a sodium salt additive and an organic additive, a mass percentage of the sodium salt additive in the electrolyte is e in a unit of %, and a mass percentage of the organic additive in the electrolyte is f in a unit of %; and

a numerical ratio of e to a is controlled to satisfy: $0.01 \leq e/a \leq 3.5$, and a numerical ratio of f to a is controlled to satisfy: $0.05 \leq f/a \leq 10$; and

assembling the positive electrode sheet, the negative electrode sheet, the separator, and the electrolyte to obtain a sodium-ion battery.

An embodiment of this application further provides a power consumption device. The power consumption device includes a housing, and an electronic element and a battery that are accommodated in the housing, the battery supplies power to the electronic element, and the battery includes the sodium-ion battery in the first aspect of embodiments of this application or the sodium-ion battery prepared by using the preparation method in the second aspect.

BRIEF DESCRIPTION OF DRAWINGS

FIG. 1 is a diagram of a structure of a sodium-ion battery 100 according to an embodiment of this application;
FIG. 2 is a diagram of a structure of a power consumption device 200 according to an embodiment of this application;
FIG. 3 is a diagram of comparison between cycle performance of sodium-ion batteries in Embodiment 3 of this application and Comparative example 2 after 300 cycles at 0.5C/0.5C;
FIG. 4 is a diagram of comparison between cycle performance of sodium-ion batteries in Embodiment 23 of this application and Comparative example 8 after 300 cycles at 0.5C/0.5C;
FIG. 5 is a diagram of comparison between cycle performance of sodium-ion batteries in Embodiment 31 of this application and Comparative example 11 after 300 cycles at 0.5C/0.5C; and
FIG. 6 is a diagram of film formation potentials of sodium-ion batteries in Embodiment 10 of this application and Comparative example 1.

DESCRIPTION OF EMBODIMENTS

The following describes embodiments of this application with reference to accompanying drawings in embodiments of this application.

Performance of the sodium-ion battery mainly depends on a positive electrode material, a negative electrode material, and an electrolyte. Additives are usually added to the electrolyte, to improve electrochemical performance of the electrolyte and improve negative electrode deposition quality. A sodium-ion battery with sodium nickel iron manganese oxide as a positive electrode material and hard carbon as a negative electrode material is used as an example. A common additive in the electrolyte forms an SEI film at a stage of formation or capacity grading to cover a surface of a hard carbon negative electrode, and the additive is almost depleted at this stage. However, the SEI film of the sodium-ion battery has poor stability, and the SEI film cannot be effectively repaired subsequently. In addition, because the additive is almost depleted, a CEI film cannot be effectively formed and repaired at a positive electrode, affecting long cycle performance and high-temperature performance of a battery system. In view of this, embodiments of this application provide a sodium-ion battery. An electrolyte of the sodium-ion battery includes a specific additive, to improve film formation quality on a surface of a negative electrode, effectively avoid continuous rupture and dissolution of the SEI film in a cycle process, and reduce a side reaction. In addition, an effective CEI film is formed on a surface of a positive electrode, to suppress dissolution of metal ions of the positive electrode, so as to improve cycle performance and high- and low-temperature storage performance of the battery and reduce gas generation.

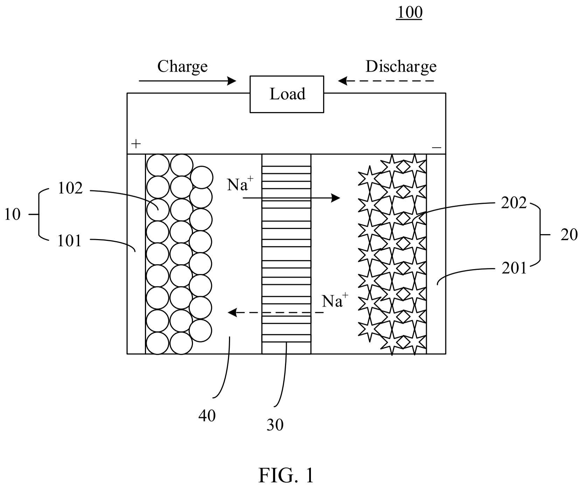

As shown in FIG. 1, an embodiment of this application provides a sodium-ion battery 100. The sodium-ion battery 100 includes a positive electrode 10, a negative electrode 20, a separator 30, and an electrolyte 40. The separator 30 is disposed between the positive electrode 10 and the negative electrode 20. The electrolyte 40 is filled between the positive electrode 10 and the negative electrode 20, and the separator 30 is immersed into the electrolyte 40. The negative electrode 20 includes a negative electrode active material 202, and the negative electrode active material 202 includes a carbon material. During charging, sodium ions are deintercalated from a positive electrode active material 102 of the positive electrode 10, pass through the electrolyte 40, and then are intercalated into the negative electrode active material 202 of the negative electrode 20. During discharging, the sodium ions are deintercalated from the negative electrode active material 202, pass through the electrolyte 40, and then are intercalated into the positive electrode active material 102. In an implementation of this application, a specific surface area of the carbon material is a in a unit of $m^2/g$. The electrolyte 40 includes an electrolyte salt, an organic solvent, and an additive. The additive includes a sodium salt additive and an organic additive. A mass percentage of the sodium salt additive in the electrolyte 40 is e in a unit of %. A numerical ratio of e to a satisfies: $0.01 \leq e/a \leq 3.5$. A mass percentage of the organic additive in the electrolyte 40 is f in a unit of %, and a numerical ratio of f to a satisfies: $0.05 \leq f/a \leq 10$. Under this condition, the electrode material and the electrolyte in the battery have good matching effect. This can effectively reduce a side reaction between the electrolyte and the electrode material, reduce impedance, improve battery cycle performance, and improve high-temperature performance of the battery.

It should be noted that the numerical ratio of e to a is a ratio of e to a without considering a unit. For example, if e is 1% and a is 0.5 $m^2/g$, the numerical ratio of e to a is e/a=1/0.5=2. Similarly, the numerical ratio of f to a is a ratio of f to a without considering a unit. For example, if f is 2% and a is 0.5 $m^2/g$, the numerical ratio of f to a is f/a=2/0.5=4.

It should be noted that the sodium-ion battery 100 in this embodiment of this application may be a battery in each phase before formation, after formation, after capacity grading, and after cycling.

In the sodium-ion battery in embodiments of this application, two types of additives: the sodium salt additive and the organic additive, are added to the electrolyte, and a ratio of addition amounts of the two types of additives to the specific surface area of the negative electrode carbon material is controlled within an appropriate range, so that a proper amount of additive is selected based on the specific surface area of the negative electrode carbon material, to guide design of matching between the electrode material and the electrolyte. This avoids a problem that due to an improper amount of the additive in the electrolyte, a side reaction between the electrolyte and the electrode material cannot be effectively reduced and an internal resistance cannot be effectively reduced, better achieves a good balance between performance of the carbon material and a function of the additive, and further better ensures electrochemical performance of the battery. The sodium salt additive may react with the negative electrode earlier than the organic additive, to passivate a surface of the negative electrode, so that film formation quality of the organic additive on the surface of the negative electrode is improved. This effectively avoids continuous rupture and dissolution of an SEI film in a cycle process, reduces contact between the negative electrode and the electrolyte, and reduces a probability of a side reaction. In addition, the battery can have an appropriate amount of additive to form an effective CEI film on a surface of the positive electrode, so as to suppress dissolution of metal ions of the positive electrode. In addition, addition of an appropriate amount of sodium salt additive can further reduce a consumption amount and a consumption speed of the organic additive, improve cycle performance of the battery, improve high- and low-temperature storage performance, and reduce gas generation of the battery.

The following describes in detail the positive electrode 10, the negative electrode 20, the separator 30, and the electrolyte 40 of the sodium-ion battery 100.

Positive electrode

As shown in FIG. 1, in this embodiment of this application, the positive electrode 10 includes a positive electrode current collector 101 and a positive electrode material layer disposed on a surface of the positive electrode current collector 101. The positive electrode current collector 101 may be a metal foil, for example, an aluminum foil, a gold foil, or a platinum foil. The positive electrode material layer includes a positive electrode active material 102, and sodium ions can be reversibly intercalated into/deintercalated from the positive electrode active material 102. In an implementation of this application, the positive electrode active material may include at least one of a layered sodium transition metal oxide, a Prussian blue (white) compound, and a sodium polyanion compound. The positive electrode active material may be one of or a combination of more (two or more) of the foregoing materials. Each of the layered sodium transition metal oxide positive electrode material and the Prussian blue (white) compound positive electrode material has a high specific capacity. The sodium polyanion compound has high electrochemical reaction stability. In this embodiment of this application, the layered sodium transition metal oxide may be, for example, sodium nickel iron manganese oxide ($NaNi_{1/3}Fe_{1/3}Mn_{1/3}O_2$, NFM for short); the Prussian blue (white) compound may be, for example, Prussian white ($Na_2Mn[Fe(CN)_6]$, PBA for short); and the sodium polyanion compound may be, for example, sodium iron phosphate ($NaFePO_4$, NFP for short). In some embodiments of this application, the positive electrode active material includes one or more of sodium nickel iron manganese oxide, Prussian white, and sodium iron phosphate.

In some implementations of this application, the positive electrode active material includes the layered sodium transition metal oxide, a specific surface area of the layered sodium transition metal oxide is denoted as b, and b may range from 0.1 $m^2$/g to 1.0 $m^2$/g. In some embodiments, the specific surface area b of the layered sodium transition metal oxide ranges from 0.2 $m^2$/g to 0.8 $m^2$/g. In some embodiments, the specific surface area b of the layered sodium transition metal oxide may be, for example, 0.1 $m^2$/g, 0.2 $m^2$/g, 0.3 $m^2$/g, 0.4 $m^2$/g, 0.5 $m^2$/g, 0.6 $m^2$/g, 0.7 $m^2$/g, 0.8 $m^2$/g, 0.9 $m^2$/g, or 1.0 $m^2$/g. The specific surface area of the positive electrode active material is controlled within an appropriate range. This helps better balance rate performance of the battery and cycle and storage performance of the battery.

In an implementation of this application, a specific capacity of the layered sodium transition metal oxide material at 0.1C is greater than or equal to 100 mAh/g. A positive electrode active material with a high capacity is selected. This helps improve overall capacity of the battery and improve charge and discharge performance.

In an implementation of this application, a mass percentage of the layered sodium transition metal oxide in the positive electrode material layer is greater than or equal to 92%. In an implementation of this application, a compaction density of the positive electrode ranges from 2.9 $g/cm^3$ to 3.6 $g/cm^3$. A mass content of the layered sodium transition metal oxide in the positive electrode material layer is controlled at a high proportion. This helps improve battery capacity. An appropriate compaction density of the positive electrode helps the battery have good other performance while obtaining a high energy density.

In some implementations of this application, the positive electrode active material includes the Prussian blue (white) compound, a specific surface area of the Prussian blue (white) compound is denoted as c, and c may range from 0.1 $m^2$/g to 1.0 $m^2$/g. In some embodiments, the specific surface area c of the Prussian blue (white) compound may range from 0.3 $m^2$/g to 0.8 $m^2$/g. In some embodiments, the specific surface area c of the Prussian blue (white) compound may be, for example, 0.1 $m^2$/g, 0.2 $m^2$/g, 0.3 $m^2$/g, 0.4 $m^2$/g, 0.5 $m^2$/g, 0.6 $m^2$/g, 0.7 $m^2$/g, 0.8 $m^2$/g, 0.9 $m^2$/g, or 1.0 $m^2$/g. The specific surface area of the positive electrode active material is controlled within an appropriate range. This helps better balance rate performance of the battery and cycle and storage performance of the battery.

In an implementation of this application, a specific capacity of the Prussian blue (white) compound material at 0.1C is greater than or equal to 130 mAh/g. A positive electrode active material with a high capacity is selected. This helps improve overall capacity of the battery and improve charge and discharge performance.

In an implementation of this application, a mass percentage of the Prussian blue (white) compound material in the positive electrode material layer is greater than or equal to 92%. In an implementation of this application, a compaction density of the positive electrode ranges from 1.2 $g/cm^3$ to 1.8 $g/cm^3$. A mass content of the Prussian blue (white) compound in the positive electrode material layer is controlled at a high proportion. This helps improve battery capacity. An appropriate compaction density of the positive electrode helps the battery have good other performance while obtaining a high energy density.

In some implementations of this application, the positive electrode active material includes the sodium polyanion compound, a specific surface area of the sodium polyanion compound is denoted as d, and d may range from 5 $m^2$/g to 25 $m^2$/g. In some embodiments, the specific surface area d of the sodium polyanion compound may range from 8 $m^2$/g to 18 $m^2$/g. In some embodiments, the specific surface area d of the sodium polyanion compound may be, for example, 5 $m^2$/g, 8 $m^2$/g, 10 $m^2$/g, 12 $m^2$/g, 15 $m^2$/g, 18 $m^2$/g, 20 $m^2$/g, 22 $m^2$/g, or 25 $m^2$/g. The specific surface area of the positive electrode active material is controlled within an appropriate range. This helps better balance rate performance of the battery and cycle and storage performance of the battery.

In an implementation of this application, a specific capacity of the sodium polyanion compound material at 0.1C is greater than or equal to 100 mAh/g. A positive electrode active material with a high capacity is selected. This helps improve overall capacity of the battery and improve charge and discharge performance.

In an implementation of this application, a mass percentage of the sodium polyanion compound in a positive electrode material layer is greater than or equal to 92%. In an implementation of this application, a compaction density of the positive electrode ranges from 1.8 $g/cm^3$ to 2.8 $g/cm^3$. A mass content of the sodium polyanion compound in the positive electrode material layer is controlled at a high proportion. This helps improve battery capacity. An appropriate compaction density of the positive electrode helps the battery have good other performance while obtaining a high energy density.

It can be understood that, after actual formation, capacity grading, or cycling of the battery, values of b, c, and d may be allowed to have specific measurement and test errors because formation of an interface film affects specific surface area testing of the material to some extent. Each value within an error range may be understood as the range defined in embodiments of this application, or a specific surface area value range obtained through material testing after formation, capacity grading, or cycling still falls within the foregoing range, which can be understood as the range defined in embodiments of this application.

The specific capacity of the positive electrode material like the layered sodium transition metal oxide, the Prussian blue (white) compound, and the sodium polyanion compound at 0.1C is a discharge specific capacity at 0.1C for a semi-battery.

In an implementation of this application, the positive electrode material layer may further include components such as a specific amount of binder and a specific amount of conductive agent. The binder may be, for example, polyvinylidene fluoride (poly 1,1-difluoroethylene, PVDF). The conductive agent may be, for example, amorphous carbon, a carbon nanotube, a carbon fiber, or graphene. The binder and the conductive agent are merely examples for description, and are not limited thereto.

Negative electrode

As shown in FIG. 1, in an implementation of this application, the negative electrode 20 includes a negative electrode current collector 201 and a negative electrode material layer disposed on a surface of the negative electrode current collector 201. The negative electrode current collector 201 may be a metal foil, for example, a copper foil, an aluminum foil, a gold foil, or a platinum foil. The negative electrode material layer includes a negative electrode active material 202, and sodium ions may be received and released from the negative electrode active material 202. In this embodiment of this application, the negative electrode active material 202 includes a carbon material. In an implementation of this application, the carbon material may include one or more of natural graphite, artificial graphite, a mesocarbon microbead (MCMB), hard carbon, soft carbon, and a porous carbon material. The negative electrode of the sodium-ion battery in this application may include one or more of the foregoing carbon materials. In some embodiments, the carbon material includes, for example, hard carbon and/or soft carbon.

In an implementation of this application, a specific surface area a of the carbon material may range from 0.5 $m^2$/g to 15 $m^2$/g. In some embodiments, the specific surface area a of the carbon material may range from 1.0 $m^2$/g to 8.0 $m^2$/g. In some embodiments, the specific surface area a of the carbon material may be, for example, 0.5 $m^2$/g, 1 $m^2$/g, 1.5 $m^2$/g, 2 $m^2$/g, 3 $m^2$/g, 4 $m^2$/g, 5 $m^2$/g, 6 $m^2$/g, 7 $m^2$/g, 8 $m^2$/g, 9 $m^2$/g, 10 $m^2$/g, 12 $m^2$/g, or 15 $m^2$/g. The negative electrode carbon material has an appropriate specific surface area, so that the negative electrode has a better capability of receiving and releasing sodium ions, and the battery has better dynamic performance. In addition, that the negative electrode carbon material has the appropriate specific surface area means that a stable SEI film can be formed by adding an appropriate amount of additive, to avoid an improper amount of the additive.

It can be understood that, after actual formation, capacity grading, or cycling of the battery, a value of a may be allowed to have a specific measurement and test error because formation of an interface film affects specific surface area testing of the material to some extent. Each value within an error range may be understood as the range defined in embodiments of this application, or a specific surface area value range obtained through material testing after formation, capacity grading, or cycling still falls within the foregoing range, which can be understood as the range defined in embodiments of this application.

In an implementation of this application, a specific capacity of the carbon material at 0.1C is greater than or equal to 230 mAh/g. A carbon material with a high capacity is selected as the negative electrode active material. This helps improve overall capacity of the battery and improve charge and discharge performance. The specific capacity of the carbon material at 0.1C is a charge specific capacity at 0.1C for a half-battery.

In an implementation of this application, a mass percentage of the carbon material in the negative electrode material layer is greater than or equal to 93%, and a compaction density of the negative electrode ranges from 0.9 g/$cm^3$ to 1.6 g/$cm^3$. An appropriate compaction density of the negative electrode helps the battery have good other performance while obtaining a high energy density.

In an implementation of this application, the negative electrode material layer may further include components such as a specific amount of binder and a specific amount of conductive agent. The binder may be, for example, sodium carboxymethyl cellulose (CMC-Na), styrene-butadiene rubber (SBR), polyacrylic acid (PAA), or sodium polyacrylate (NaPAA). The conductive agent may be, for example, amorphous carbon, a carbon nanotube, a carbon fiber, or graphene. The binder and the conductive agent are merely examples for description, and are not limited thereto.

Separator

As shown in FIG. 1, in the sodium-ion battery 100, the separator 30 blocks electrons, and allows sodium ions to pass through. In some embodiments of this application, the separator 30 includes but is not limited to a single-layer polypropylene (polypropylene, PP) separator, a single-layer polyethylene (polyethylene, PE) separator, a double-layer PP/PE separator, a double-layer PP/PP separator, a triple-layer PP/PE/PP separator, and a ceramic-coated PE separator.

Electrolyte

As shown in FIG. 1, in the sodium-ion battery 100, the electrolyte 40 is a transmission medium through which sodium ions are transmitted between the positive electrode 10 and the negative electrode 20. In an implementation of this application, the electrolyte 40 includes an organic solvent, an electrolyte salt, and an additive, and both the electrolyte salt and the additive are dissolved into the organic solvent.

In an implementation of this application, the organic solvent includes but is not limited to one or more of a carbonate solvent, an ether solvent, and a carboxylate solvent. The carbonate solvent includes but is not limited to one or more of dimethyl carbonate, ethyl methyl carbonate, diethyl carbonate, ethylene carbonate, propylene carbonate, trifluoromethyl ethylene carbonate, bis(2,2,2-trifluoroethyl) carbonate, and (2,2,2-trifluoroethyl) methyl carbonate. The ether solvent includes but is not limited to one or more of tetrahydrofuran, 2-methyltetrahydrofuran, 1,3-dioxolane, dimethoxymethane, 1,2-dimethoxyethane, diethylene glycol dimethyl ether, 1,1,2,2-tetrafluoroethyl-2,2,3,3-tetrafluoropropylether, and bis(2,2,2-trifluoroethyl) ether. The carboxylate solvent includes but is not limited to one or more of methyl formate, ethyl formate, ethyl acetate, propyl acetate, propyl propionate, methyl difluoroacetate, and methyl trifluoroacetate.

In an implementation of this application, the electrolyte salt includes but is not limited to one or more of $NaClO_4$, $NaBF_4$, $NaPF_6$, $NaAsF_6$, $NaCF_3SO_3$, NaTDI, $Na[(CF_3SO_2)_2N]$, $Na[(FSO_2)_2N]$, and $Na[(C_mF_{2m+1}SO_2)(C_nF_{2n+1}SO_2)N]$, where m and n are natural numbers. In some embodiments of this application, a molar concentration of the electrolyte salt in the electrolyte may range from 0.01 mol/L to 5.0 mol/L. In some embodiments, the molar concentration of the electrolyte salt in the electrolyte may be, for example, 0.01 mol/L, 0.1 mol/L, 0.5 mol/L, 0.8 mol/L, 1.0 mol/L, 1.2 mol/L, 1.5 mol/L, 1.8 mol/L, 2.0 mol/L, 3.0 mol/L, 4.0 mol/L, or 5.0 mol/L.

In an implementation of this application, the additive includes a sodium salt additive and an organic additive.

In an implementation of this application, a mass percentage of the sodium salt additive in the electrolyte 40 is e, and a numerical ratio of e to a satisfies: $0.01 \leq e/a \leq 3.5$. In some embodiments, the numerical ratio of e/a ranges from 0.1 to 3.0. As an example for description, the numerical ratio of e/a is typical but not limited, for example, may be 0.01, 0.02, 0.05, 0.1, 0.3, 0.5, 0.7, 1.0, 1.2, 1.5, 1.8, 2.0, 2.1, 2.2, 2.5, 2.7, 2.8, 3.0, 3.2, 3.5, or a number between any two of the foregoing values, all of which are values within a value range of e/a. For example, e/a may be any value from 0.01 to 0.1, any value from 0.1 to 0.8, any value from 0.5 to 1.5, any value from 2.1 to 3.5, or a number between any two other values. The ratio e/a represents a relationship between the sodium salt additive and a specific surface area of a negative electrode active material. When the value of e/a is excessively large, the sodium salt additive is excessive, and the excessive sodium salt additive forms a film on a surface of the negative electrode. As a result, impedance is increased, and storage performance of the battery deteriorates. When the value of e/a is excessively small, the sodium salt additive is insufficient to effectively passivate the surface of the hard carbon negative electrode. In this case, it is difficult for FEC to form an effective SEI film, or stability of the SEI film deteriorates. As a result, a cycle life of the battery is shortened, and storage performance of the battery deteriorates.

In an implementation of this application, the mass percentage e of the sodium salt additive in the electrolyte may range from 0.05% to 3%. In some embodiments, the mass percentage e of the sodium salt additive in the electrolyte may range from 0.1% to 2%. As an example for description, the mass percentage e of the sodium salt additive in the electrolyte may be, for example, 0.05%, 0.08%, 0.1%, 0.2%, 0.5%, 0.7%, 0.9%, 1.0%, 1.2%, 1.4%, 1.6%, 1.8%, 2.0%, 2.2%, 2.5%, 2.7%, or 3%. The appropriate amount of sodium salt additive is added to the electrolyte, so that the surface of the negative electrode can be better passivated, film formation quality of the SEI film of the negative electrode can be improved, and the SEI film can be effectively repaired in a battery cycle process. In addition, it is more conducive to forming an effective CEI film on a surface of the positive electrode of the battery in the cycle process, to better improve long cycle performance of the battery. Addition of the appropriate amount of sodium salt additive can further reduce a consumption amount and a consumption speed of the organic additive, improve high- and low-temperature storage performance of the battery, and reduce gas generation of the battery.

In an implementation of this application, a mass percentage of the organic additive in the electrolyte 40 is f, and a numerical ratio of f to a satisfies: $0.05 \leq f/a \leq 10$. In some embodiments, the numerical ratio of f/a ranges from 0.1 to 5. As an example for description, a value of f/a is typical but not limited, for example, may be 0.05, 0.07, 0.1, 0.5, 1, 2, 3, 4, 5, 6, 7, 8, 9, 10, or a number between any two of the foregoing values, all of which are values within a value range of f/a. For example, f/a may be any value from 0.05 and 0.5, any value from 0.1 to 5, any value from 1 to 10, or a number between any two other values.

In an implementation of this application, the organic additive includes fluorocarbonate, and a mass percentage f of the fluorocarbonate in the electrolyte ranges from 0.1% to 10%. In some embodiments, f may range from 0.5% to 5%. As an example for description, f may be 0.1%, 0.3%, 0.5%, 0.7%, 1%, 3%, 5%, 7%, or 10%. The fluorocarbonate has low lowest unoccupied molecular orbital (LUMO) energy, and is easy to be reduced earlier than another electrolyte solvent. The fluorocarbonate used as an organic additive can form a highly crystalline SEI film rich in an inorganic component on the surface of the negative electrode of the sodium-ion battery, to effectively protect the negative electrode and ensure uniform and rapid migration of sodium ions at an interface. An amount of the fluorocarbonate is controlled within the foregoing range. This can better exploit film formation advantages of the fluorocarbonate, and better improve cycle performance of the battery.

In an implementation of this application, in the electrolyte, the mass percentage e of the sodium salt additive and the mass percentage f of the fluorocarbonate directly affect film formation performance of the positive or negative electrode of the sodium-ion battery. In this implementation of this application, a numerical ratio of e to f satisfies: $0.01 \leq e/f \leq 8$, to better form a film on the surface of the positive or negative electrode, so as to improve battery performance. In some embodiments, the numerical ratio of e/f ranges from 0.02 to 5. As an example for description, the numerical ratio of e/f is typical but not limited, for example, may be 0.01, 0.02, 0.05, 0.1, 0.5, 1.0, 2.0, 3.0, 4.0, 5.0, 6.0, 7.0, 8.0, or a number between any two of the foregoing values, all of which are values within a value range of e/f. For example, e/f may be any value from 0.01 to 0.1, any value from 0.05 to 5.0, any value from 1.0 to 8.0, or a number between any two other values. The ratio e/f represents that the sodium salt additive and the organic additive compete for consumption to form a film. The ratio e/f is controlled within an appropriate range. The can better avoid an excessive sodium salt additive and prevent the excessive sodium salt additive from forming a film on the surface of the negative electrode, thereby avoiding an increase in impedance and deterioration of storage performance of the battery. In addition, this can better avoid a high FEC content, thereby avoiding deterioration of high-temperature storage performance and aggravation of high-temperature gas generation.

It may be understood that, in specific embodiments, values of a, e, and f and calculated values of e/a, f/a, and e/f may be allowed to have specific measurement and test system errors in each stage before formation, after formation, after capacity grading, and after cycling of the battery during an actual test operation. Each value within a system error range may be understood as the range defined in embodiments of this application.

In an implementation of this application, the sodium salt additive may include one or more of sodium bis(oxalato) borate (NaBOB), sodium difluoro(oxalato)borate (NaDFOB), sodium difluorodioxalate phosphate (NaDFOP), and sodium difluorophosphate ($NaPO_2F_2$). The foregoing sodium salt additive has a high reduction and film formation potential, and can react with the negative electrode earlier than the organic additive, to passivate the surface of the negative electrode. This improves film formation quality of the organic additive on the surface of the negative electrode, effectively avoids continuous rupture and dissolution of the SEI film in a cycle process, reduces contact between the negative electrode and the electrolyte, and reduces a probability of a side reaction.

In an implementation of this application, the fluorocarbonate may include at least one of fluoroethylene carbonate (FEC) and difluoroethylene carbonate (DFEC). The foregoing two types of fluorocarbonate have good film formation performance on the surface of the electrode, can effectively protect the electrode, and ensure uniform and rapid migration of sodium ions at an interface between the electrode and the electrolyte, thereby improving dynamic performance and cycle performance of the battery.

In an implementation of this application, a numerical ratio of the mass percentage e of the sodium salt additive to a specific surface area b of a layered sodium transition metal oxide satisfies: $0.1 \leq e/b \leq 15$. In some embodiments, the numerical ratio of e/b may range from 0.2 to 10. As an example for description, the numerical ratio of e/b may be typical but not limited, for example, may be 0.1, 0.2, 0.5, 1, 2, 3, 4, 5, 6, 7, 8, 9, 10, 12, 15, or a number between any two of the foregoing values, all of which are values within a value range of e/b. For example, e/b may be any value from 0.1 to 1, any value from 0.2 to 5, any value from 1 to 10, any value from 5 to 15, or a number between any two other values. The numerical ratio of the mass percentage e of the sodium salt additive to the specific surface area b of the layered sodium transition metal oxide of the positive electrode active material is controlled within an appropriate range, to better achieve a good balance between performance of the layered sodium transition metal oxide and a function of the additive, and better improve battery performance.

In an implementation of this application, a numerical ratio of the mass percentage e of the sodium salt additive to a specific surface area c of a Prussian blue (white) compound satisfies: $0.1 \leq e/c \leq 15$. In some embodiments, the numerical ratio of e/c may range from 0.2 to 10. As an example for description, the numerical ratio of e/c may be typical but not limited, for example, may be 0.1, 0.2, 0.5, 1, 2, 3, 4, 5, 6, 7, 8, 9, 10, 12, 15, or a number between any two of the foregoing values, all of which are values within a value range of e/c. For example, e/c may be any value from 0.1 to 1, any value from 0.2 to 5, any value from 1 to 10, any value from 5 to 15, or a number between any two other values. The numerical ratio of the mass percentage e of the sodium salt additive to the specific surface area c of the Prussian blue (white) compound of the positive electrode active material is controlled within an appropriate range, to better achieve a good balance between performance of the Prussian blue (white) compound and a function of the additive, and better improve battery performance.

In an implementation of this application, a numerical ratio of the mass percentage e of the sodium salt additive to a specific surface area d of a sodium polyanion compound satisfies: $0.005 \leq e/d \leq 0.4$. In some embodiments, the numerical ratio of e/d may range from 0.01 to 0.3. As an example for description, the numerical ratio of e/d may be typical but not limited, for example, may be 0.005, 0.01, 0.05, 0.1, 0.2, 0.3, 0.4, or a number between any two of the foregoing values, all of which are values within a value range of e/d. For example, e/d may be any value from 0.005 to 0.05, any value from 0.01 to 0.2, any value from 0.1 to 0.3, any value from 0.2 to 0.4, or a number between any two other values. The numerical ratio of the mass percentage e of the sodium salt additive to the specific surface area d of the sodium polyanion compound of the positive electrode active material is controlled within an appropriate range, to better achieve a good balance between performance of the sodium polyanion compound and a function of the additive, and better improve battery performance.

It may be understood that calculated values of e/b, e/c, and e/d may be allowed to have specific measurement and test system errors during an actual test operation. Each value within a system error range may be understood as the range defined in embodiments of this application.

It should be noted that the numerical ratio of e to b is a ratio of e to b without considering a unit. For example, if e is 1% and b is 0.5 $m^2/g$, the numerical ratio of e to b is e/b=1/0.5=2. Similarly, the numerical ratio of e to c is a ratio of e to c without considering a unit. For example, if e is 1% and c is 0.5 $m^2/g$, the numerical ratio of e to c is e/c=1/0.5=2. Similarly, the numerical ratio of e to d is a ratio of e to d without considering a unit. For example, if e is 1% and d is 10 $m^2/g$, the numerical ratio of e to d is e/d=1/10=0.1.

In an implementation of this application, the electrolyte may further include one or more of a sulfur-containing ester compound, a nitrile compound, and an acid anhydride compound. The sulfur-containing ester compound may form a high-quality interface film on a surface of a positive or negative electrode material, to improve high-temperature performance of the sodium-ion battery, and suppress gas generation. The nitrile compound may complex transition metal ions in the positive electrode material, to reduce catalytic activity of the transition metal ions, reduce dissolution of the transition metal ions, and improve oxidation resistance of the electrolyte. The acid anhydride compound may form a film on the surface of the positive or negative electrode material, to reduce a problem caused by high alkalinity of the positive electrode material.

In some embodiments of this application, a mass percentage of the sulfur-containing ester compound in the electrolyte may range from 1% to 5%, for example, may be 1%, 2%, 3%, 4%, or 5%. The sulfur-containing ester compound is controlled to an appropriate content. This does not reduce other performance of the battery while achieving beneficial effect.

In an implementation of this application, the sulfur-containing ester compound includes but is not limited at least one of dimethyl sulfite, diethyl sulfite, vinyl sulfite, ethylene sulfate (DTD), propylene sulfate (TS), methylene methanedisulfonate (MMDS), 1,3-propansultone (PS), 1,3-propene sultone (PST), 1,4-butane sultone (BS), dimethyl sulfate, diethyl sulfate, and propane 1,2-cyclic sulfate.

In some embodiments of this application, a mass percentage of the nitrile compound in the electrolyte may range from 1% to 6%, for example, may be 1%, 2%, 3%, 4%, 5%, or 6%. The nitrile compound is controlled to an appropriate content. This does not reduce other performance of the battery while achieving beneficial effect.

In an implementation of this application, the nitrile compound includes a mononitrile compound and/or a polynitrile compound. In some implementations, the mononitrile compound includes but is not limited to at least one of acetonitrile and p-tolunitrile. In some implementations, the polynitrile compound includes one or more of succinonitrile (SN), glutaronitrile, adiponitrile, 1,2-bis(2-cyanoethoxy)ethane (DENE), and 1,3,6-hexanetricarbonitrile (HTCN).

In some embodiments of this application, a mass percentage of the acid anhydride compound in the electrolyte may range from 0.05% to 1%, for example, may be 0.05%, 0.1%, 0.2%, 0.3%, 0.4%, 0.5%, 0.6%, 0.7%, 0.8%, 0.9%, or 1.0%. The acid anhydride compound is controlled to an appropriate content. This does not reduce other performance of the battery while achieving beneficial effect.

In an implementation of this application, the acid anhydride compound includes but is not limited to one or more of succinic anhydride (SA), glutaric anhydride, adipic anhydride, maleic anhydride, and cyclic phosphoric anhydride.

A specific shape or type of the sodium-ion battery in embodiments of this application is not limited. The sodium-ion battery may be a square battery, a button battery, a cylindrical battery, a soft pack battery, or the like, or may be a wound battery or a stacked battery.

In the sodium-ion battery in embodiments of this application, the two types of additives: the sodium salt additive and the organic additive, are added to the electrolyte, and a ratio of addition amounts of the two types of additives to the specific surface area of the negative electrode carbon material is controlled within an appropriate range, so that an amount of the additive is properly designed based on the specific surface area of the negative electrode carbon material, to better achieve a good balance between performance of the carbon material and a function of the additive. This avoids a problem that due to an improper amount of the additive in the electrolyte, a side reaction between the electrolyte and the electrode material cannot be effectively reduced and an internal resistance cannot be effectively reduced, and further better ensures electrochemical performance of the battery. Further, a ratio of the addition amount of the sodium salt additive to the addition amount of the organic additive is controlled, to better balance performance of the battery in all aspects. Further, the addition amount of the sodium salt additive is adjusted based on a specific surface area of a positive electrode active material, to better balance performance of the positive electrode active material and a function of the sodium salt additive. In this application, relationships between parameters of the electrolyte and the positive and negative electrode active materials are accurately controlled, to significantly improve comprehensive performance of a cell, reduce trial-and-error of a DOE (Design of Experiment, design of experiment), shorten a development period, and provide practical guidance. The sodium salt additive may react with the negative electrode earlier than the organic additive, to passivate the surface of the negative electrode. This improves film formation quality of the organic additive on the surface of the negative electrode, effectively avoids continuous rupture and dissolution of the SEI film in a cycle process, reduces contact between the negative electrode and the electrolyte, and reduces a probability of a side reaction. In addition, an appropriate amount of the additive can form an effective CEI film on the surface of the positive electrode, to suppress dissolution of metal ions of the positive electrode. In addition, addition of an appropriate amount of sodium salt additive can further reduce a consumption amount and a consumption speed of the organic additive, improve cycle performance of the battery, improve high- and low-temperature storage performance, and reduce gas generation of the battery.

The sodium-ion battery provided in embodiments of this application may be used in a terminal device, for example, which may be a consumer electronic product like as a mobile phone, a tablet computer, a mobile power supply, a portable computer, a notebook computer, or another wearable or movable electronic device, or may be a device product like a vehicle, an energy storage device, or a base station, to improve product safety and reliability.

An embodiment of this application further provides a preparation method for a sodium-ion battery, including:

providing a positive electrode sheet, a negative electrode sheet, a separator, and an electrolyte, where the negative electrode sheet includes a negative electrode active material, the negative electrode active material includes a carbon material, a specific surface area of the carbon material is a in a unit of $m^2/g$, the electrolyte includes an electrolyte salt, an organic solvent, and an additive, the additive includes a sodium salt additive and an organic additive, a mass percentage of the sodium salt additive in the electrolyte is e in a unit of %, and a mass percentage of the organic additive in the electrolyte is f in a unit of %; and

a numerical ratio of e to a is controlled to satisfy: $0.01 \leq e/a \leq 3.5$, and a numerical ratio of f to a is controlled to satisfy: $0.05 \leq f/a \leq 10$; and

assembling the positive electrode sheet, the negative electrode sheet, the separator, and the electrolyte to obtain a sodium-ion battery.

It may be understood that for related features in the preparation method, refer to the foregoing descriptions of the sodium-ion battery. Details are not described herein again.

According to the preparation method for a sodium-ion battery provided in this embodiment of this application, a ratio of addition amounts of the sodium salt additive and the organic additive to a specific surface area of the negative electrode carbon material is controlled within an appropriate range, to effectively improve cycle performance and storage performance of the battery.

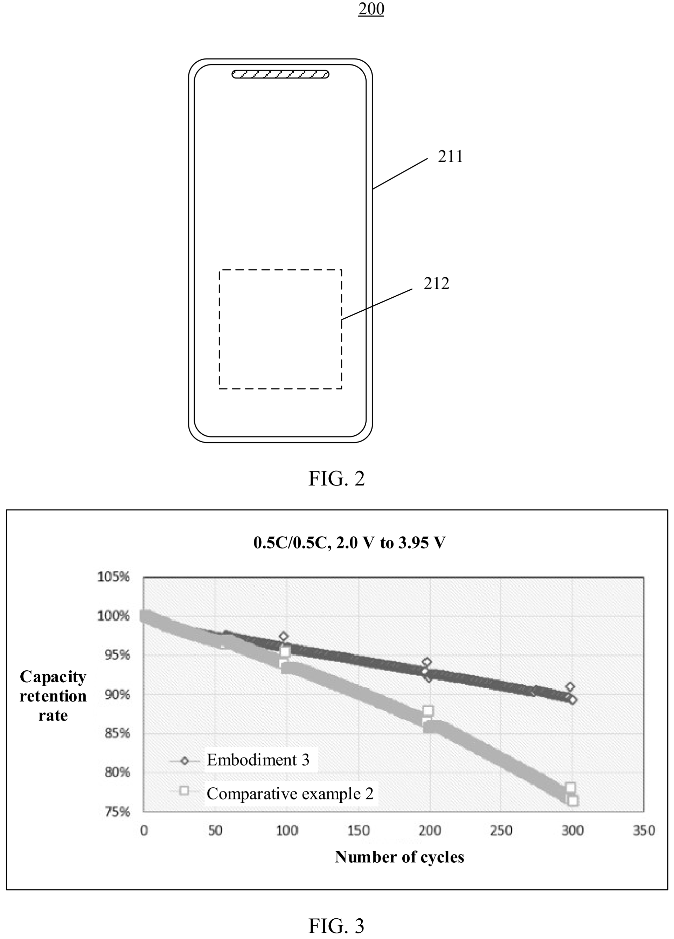

Refer to FIG. 2. An embodiment of this application further provides a power consumption device 200. The power consumption device 200 includes a housing 211, and an electronic element and a battery 212 that are accommodated in the housing 211. The battery 212 supplies power to the electronic element. The battery 212 includes the sodium-ion battery in the foregoing embodiments of this application. In this application, the power consumption device 200 may be a consumer electronic product like a mobile phone, a tablet computer, a desktop computer, a notebook computer, a mobile power supply, a portable computer, a smart screen, a display, a sound box, a vehicle-mounted product, or another wearable or movable electronic device (for example, glasses, a watch, a wristband, or a headset), or may be a device product like a vehicle, an energy storage device, or a base station.

Embodiments of this application are further described below by using a plurality of embodiments.

In sodium-ion batteries in the following embodiments and comparative examples, $NaNi_{1/3}Fe_{1/3}Mn_{1/3}O_2$ (NFM for short), $Na_2Mn[Fe(CN)_6]$ (PBA for short), and $NaFePO_4$ (NFP for short) are used as a positive electrode active material, and a hard carbon material and a soft carbon material are used as a negative electrode active material.

Preparation of the sodium-ion battery:

Polyvinylidene fluoride (PVDF) with a mass percentage of 2%, a conductive agent Super P with a mass percentage of 2%, and a positive electrode active material (NFM, PBA, and NFP) with a mass percentage of 96% are weighed and sequentially added to N-methylpyrrolidone (NMP), and are fully stirred and mixed uniformly to obtain slurry. The slurry is coated on an aluminum foil current collector, and is dried, cold pressed, and slit to obtain a positive electrode sheet.

CMC with a mass percentage of 1.5%, SBR with a mass percentage of 2.5%, Super P with a mass percentage of 1%, and a negative electrode active material (hard carbon and soft carbon) with a mass percentage of 95% are weighed and sequentially added to deionized water, and are fully stirred and mixed uniformly to obtain slurry. The slurry is coated on a copper foil current collector, and is dried, cold pressed, and slit to obtain a negative electrode sheet.

The prepared positive electrode sheet, the prepared negative electrode sheet, and a commercial PE separator are made into a cell. The cell is packaged with a polymer, and the prepared sodium-ion battery electrolyte is poured. A 2 Ah soft-pack sodium-ion battery is prepared after a process such as formation.

Embodiment 1

Preparation of an electrolyte: Ethylene carbonate (EC), propylene carbonate (PC), and ethyl methyl carbonate (EMC) are mixed at a mass ratio of EC:PC:EMC=10:25:65, then sodium hexafluorophosphate ($NaPF_6$) is added to an obtained mixture until a molar concentration is 1 mol/L, and additives of different types and contents are added (refer to Table 1).

A sodium salt additive A is NaDFOB, and a sodium salt additive B is $NaPO_2F_2$. An FEC content f in an original electrolyte is an FEC content in the prepared electrolyte, namely, an FEC content in an electrolyte before battery formation.

Embodiments 2 to 41 and Comparative examples 1 to 13 are all performed according to the method in Embodiment 1. Differences are different types of positive electrode active materials and negative electrode active materials of the sodium-ion battery, different specific surface areas a, b, c, d of the positive electrode active materials and the negative electrode active materials, different types and contents of additives in electrolytes, different e/a, different e/f, different f/a, different e/b, different e/c, or different e/d. Specific content is shown in Table 1. In addition, 2% of sulfur-containing ester compound (2% PS) is further added to an electrolyte in Embodiment 37, 2% of nitrile compound (2% DENE) is further added to an electrolyte in Embodiment 38, and 0.1% of acid anhydride compound (0.1% SA) is further added to an electrolyte in Embodiment 39.

25°C cycle performance test:

Each of sodium-ion batteries prepared in Embodiments 1 to 41 and Comparative examples 1 to 13 is placed in an oven at a constant temperature of 25°C±3°C, charged at a constant current of 0.5C to 3.95 V, then charged at a constant voltage until the current decreases to 0.05C, left to stand for 10 min, and then discharged at a constant current of 0.5C to 2.0 V. This process is repeated for 300 times. A discharge capacity in a 1st cycle and a discharge capacity in a 300th cycle are recorded, a capacity retention rate in the cycle is calculated according to the following formula, and a result is recorded in Table 1.

Capacity retention rate (%)=discharge capacity in the 300th cycle/discharge capacity in the 1st cycle $\times$ 100%

Test of performance after storage at 60°C for 30 days

Each of the sodium-ion batteries prepared in Embodiments 1 to 41 and Comparative examples 1 to 13 is placed in an oven at a constant temperature of 25°C±3°C, charged at a constant current of 0.2C to 3.95 V, then charged at a constant voltage until the current decreases to 0.05C, left to stand for 10 minutes, and then discharged at a constant current of 0.2C to 2.0 V; and this capacity is recorded as an initial capacity. The battery is charged again at a constant current of 0.2C to 3.95 V, then charged at a constant voltage until the current decreases to 0.05C, and left to stand for 10 minutes. The charged battery is stored at a temperature of 60°C for 30 days, then stored in an open circuit at a room temperature for 2 hours, and discharged at a constant current of 0.2C to 2.0 V; and a remaining capacity is recorded. A recorded remaining capacity retention rate in this cycle is calculated according to the following formula, and a result is recorded in Table 1.

Recorded remaining capacity retention rate (%)=remaining capacity/initial capacity×100%

The specific surface area of the positive electrode active material and the specific surface area of the negative electrode active material are measured via a specific surface area analyzer. A content of the sodium salt additive in the electrolyte may be measured via an ion chromatograph, and the organic additive like FEC in the electrolyte can be measured by using gas chromatography.

Table 1 Parameters details and battery performance in Embodiments 1 to 41 and Comparative examples 1 to 13

| | Content of a sodium salt additive A (%) | Content of a sodium salt additive B (%) | Total content of the sodium salt additives e (%) | Content of FEC in an original electrolyte f (%) | Specifice surface area a of a carbon materia 1 (m²/g) | e/a | e/f | f/a | Specific surface area of a positive electro de active materia 1 (b, c, or d) (m²/g) | e/b, e/c, or e/d | Content of FEC in an electrolyte after formation (%) | Capacity retention rate at 0.5C/ 0.5C for 300 circles (%) | Capacity retention rate after 30 days of storage at 60° C (%) | Whether a battery generates a gas after storage at 60°C for 30 days |
|---|---|---|---|---|---|---|---|---|---|---|---|---|---|---|
| Embodiment 1 | | 0.1 | 0.1 | 1.0 | 10.0 (hard carbon) | 0.01 | 0.1 | 0.1 | 0.5 (NFM) | 0.2 | 0.50 | 83.6 | 93.2 | No |
| Embodiment 2 | | 0.5 | 0.5 | 1.0 | 5.0 (hard carbon) | 0.1 | 0.5 | 0.2 | 0.5 (NFM) | 1.0 | 0.53 | 86.4 | 94.3 | No |
| Embodiment 3 | | 1.0 | 1.0 | 1.0 | 5.0 (hard carbon) | 0.2 | 1.0 | 0.2 | 0.5 (NFM) | 2.0 | 0.58 | 89.3 | 96.6 | No |
| Embodiment 4 | | 0.8 | 0.8 | 3.0 | 3.0 (hard carbon) | 0.27 | 0.27 | 1.0 | 0.5 (NFM) | 1.6 | 1.78 | 90.3 | 95.8 | No |
| Embodiment 5 | | 0.8 | 0.8 | 5.0 | 5.0 (hard carbon) | 0.16 | 0.16 | 1.0 | 0.5 (NFM) | 1.6 | 2.26 | 87.3 | 94.8 | No |
| Embodiment 6 | | 0.8 | 0.8 | 10.0 | 5.0 (hard carbon) | 0.16 | 0.08 | 2.0 | 0.5 (NFM) | 1.6 | 5.82 | 85.7 | 93.1 | No |

14

(continued)

| | Content of a sodium salt additive A (%) | Content of a sodium salt additive B (%) | Total content of the sodium salt additives e (%) | Content of FEC in an original electrolyte f (%) | Specific surface area of a carbon materia 1 (m2/g) | e/a | e/f | f/a | Specific surface area of a positive electrode active materia 1 (b, c, or d) (m2/g) | e/b, e/c, or e/d | Content of FEC in an electrolyte after formation (%) | Capacity retention rate at 0.5C/0.5C for 300 circles (%) | Capacity retention rate after 30 days of storage at 60°C (%) | Whether a battery generates a gas after storage at 60°C for 30 days |
|---|---|---|---|---|---|---|---|---|---|---|---|---|---|---|
| Embodiment 7 | | 0.6 | 0.6 | 1.0 | 3.0 (soft carbon) | 0.2 | 0.6 | 0.33 | 0.5 (NFM) | 1.2 | 0.55 | 89.4 | 94.5 | No |
| Embodiment 8 | | 1.0 | 1.0 | 2.0 | 1.0 (soft carbon) | 1.0 | 0.5 | 2.0 | 0.5 (NFM) | 2.0 | 1.23 | 90.6 | 96.8 | No |
| Embodiment 9 | 0.1 | | 0.1 | 1.0 | 5.0 (hard carbon) | 0.02 | 0.1 | 0.2 | 0.5 (NFM) | 0.2 | 0.52 | 84.5 | 93.3 | No |
| Embodiment 10 | 0.5 | | 0.5 | 2.0 | 2.0 (hard carbon) | 0.25 | 0.25 | 1.0 | 0.5 (NFM) | 1.0 | 0.95 | 86.8 | 95.2 | No |
| Embodiment 11 | 1.0 | | 1.0 | 2.0 | 2.0 (soft carbon) | 0.5 | 0.5 | 1.0 | 0.5 (NFM) | 2.0 | 1.15 | 88.7 | 95.4 | No |
| Embodiment 12 | 1.0 | | 1.0 | 5.0 | 1.0 (soft carbon) | 1.0 | 0.2 | 5.0 | 0.5 (NFM) | 2.0 | 2.35 | 88.3 | 94.8 | No |

| | Content of a sodium salt additive A (%) | Content of a sodium salt additive B (%) | Total content of the sodium salt additives e (%) | Content of FEC in an original electrolyte f (%) | Specifice surface area a of a carbon materia 1 ($m^2/g$) | e/a | e/f | f/a | Specific surface area of a positive electrode active materia 1 (b, c, or d) ($m^2/g$) | e/b, e/c, or e/d | Content of FEC in an electrolyte after formation (%) | Capacity retention rate at 0.5C/0.5C for 300 circles (%) | Capacity retention rate after 30 days of storage at 60°C (%) | Whether a battery generates a gas after storage at 60°C for 30 days |
|---|---|---|---|---|---|---|---|---|---|---|---|---|---|---|
| Embodiment 13 | 2.0 | | 2.0 | 5.0 | 1.0 (soft carbon) | 2.0 | 0.4 | 5.0 | 0.5 (NFM) | 4.0 | 2.46 | 87.6 | 94.5 | No |
| Embodiment 14 | 3.0 | | 3.0 | 10.0 | 1.0 (soft carbon) | 3.0 | 0.3 | 10.0 | 0.5 (NFM) | 6.0 | 4.96 | 85.1 | 93.2 | No |
| Embodiment 15 | 0.5 | 0.5 | 1.0 | 2.0 | 2.0 (hard carbon) | 0.5 | 0.5 | 1.0 | 0.5 (NFM) | 2.0 | 1.01 | 89.6 | 96.5 | No |
| Embodiment 16 | 1.0 | 1.0 | 2.0 | 2.0 | 2.0 (hard carbon) | 1.0 | 1.0 | 1.0 | 0.5 (NFM) | 4.0 | 1.25 | 90.1 | 96.6 | No |
| Embodiment 17 | 2.0 | 0.8 | 2.8 | 0.6 | 0.8 (hard carbon) | 3.5 | 4.67 | 0.75 | 0.5 (NFM) | 5.6 | 0.27 | 84.6 | 94.3 | No |
| Embodiment 18 | | 1.0 | 1.0 | 1.0 | 5.0 (hard carbon) | 0.2 | 1.0 | 0.2 | 0.4 (NFM) | 2.5 | 0.61 | 88.8 | 95.9 | No |

| | Content of a sodium salt additive A (%) | Content of a sodium salt additive B (%) | Total content of the sodium salt additives e (%) | Content of FEC in an original electrolyte f (%) | Specific surface area a of a carbon material 1 (m²/g) | e/a | e/f | f/a | Specific surface area of a positive electrode active material 1 (b, c, or d) (m²/g) | e/b, e/c, or e/d | Content of FEC in an electrolyte after formation (%) | Capacity retention rate at 0.5C/0.5C for 300 circles (%) | Capacity retention rate after 30 days of storage at 60°C (%) | Whether a battery generates a gas after storage at 60°C for 30 days |
|---|---|---|---|---|---|---|---|---|---|---|---|---|---|---|
| Embodiment 19 | 1.0 | | 1.0 | 1.0 | 5.0 (hard carbon) | 0.2 | 1.0 | 0.2 | 0.4 (NFM) | 2.5 | 0.59 | 87.9 | 95.4 | No |
| Embodiment 20 | 1.0 | 0.5 | 1.5 | 2.0 | 3.0 (hard carbon) | 0.5 | 0.75 | 0.67 | 0.6 (NFM) | 2.5 | 0.96 | 89.4 | 95.5 | No |
| Embodiment 21 | 1.0 | 0.5 | 1.5 | 2.0 | 3.0 (soft carbon) | 0.5 | 0.75 | 0.67 | 0.6 (NFM) | 2.5 | 0.98 | 89.2 | 95.6 | No |
| Embodiment 22 | | 1.0 | 1.0 | 1.0 | 5.0 (hard carbon) | 0.2 | 1.0 | 0.2 | 0.8 (PBA) | 1.25 | 0.46 | 87.5 | 95.2 | No |
| Embodiment 23 | 1.0 | | 1.0 | 1.0 | 5.0 (hard carbon) | 0.2 | 1.0 | 0.2 | 0.8 (PBA) | 1.25 | 0.45 | 87.9 | 95.3 | No |
| Embodiment 24 | 1.0 | 0.5 | 1.5 | 2.0 | 5.0 (hard carbon) | 0.3 | 0.75 | 0.4 | 0.8 (PBA) | 1.88 | 0.83 | 88.6 | 95.5 | No |

EP 4 718 563 A1

| | Content of a sodium salt additive A (%) | Content of a sodium salt additive B (%) | Total content of the sodium salt additives e (%) | Content of FEC in an original electrolyte f (%) | Specifice surface area a of a carbon materia 1 (m²/g) | e/a | e/f | f/a | Specific surface area of a positive electrode active materia 1 (b, c, or d) (m²/g) | e/b, e/c, or e/d | Content of FEC in an electrolyte after formation (%) | Capacity retention rate at 0.5C/ 0.5C for 300 circles (%) | Capacity retention rate after 30 days of storage at 60° C (%) | Whether a battery generates a gas after storage at 60°C for 30 days |
|---|---|---|---|---|---|---|---|---|---|---|---|---|---|---|
| Embodiment 25 | 1.0 | 0.5 | 1.5 | 2.0 | 3.0 (hard carbon) | 0.5 | 0.75 | 0.67 | 0.8 (PBA) | 1.88 | 0.88 | 89.5 | 96.1 | No |
| Embodiment 26 | 1.0 | 0.5 | 1.5 | 2.0 | 3.0 (hard carbon) | 0.5 | 0.75 | 0.67 | 0.6 (PBA) | 2.5 | 0.89 | 89.8 | 96.3 | No |
| Embodiment 27 | 1.0 | 0.5 | 1.5 | 2.0 | 2.0 (soft carbon) | 0.75 | 0.75 | 1.0 | 0.6 (PBA) | 2.5 | 1.02 | 90.3 | 96.5 | No |
| Embodiment 28 | | 1.0 | 1.0 | 1.0 | 2.0 (soft carbon) | 0.5 | 1.0 | 0.5 | 0.5 (PBA) | 2.0 | 0.55 | 88.2 | 96.1 | No |
| Embodiment 29 | 2.0 | 1.0 | 3.0 | 5.0 | 1.0 (soft carbon) | 3.0 | 0.6 | 5.0 | 0.5 (PBA) | 6.0 | 2.21 | 86.1 | 94.4 | No |
| Embodiment 30 | 0.5 | 1.0 | 1.5 | 10.0 | 2.0 (hard carbon) | 0.75 | 0.15 | 5.0 | 0.5 (PBA) | 3.0 | 5.23 | 84.8 | 93.3 | No |

EP 4 718 563 A1

| | Content of a sodium salt additive A (%) | Content of a sodium salt additive B (%) | Total content of the sodium salt additives e (%) | Content of FEC in an original electrolyte f (%) | Specifice surface area a of a carbon materia 1 (m²/g) | e/a | e/f | f/a | Specific surface area of a positive electrode active materia 1 (b, c, or d) (m²/g) | e/b, e/c, or e/d | Content of FEC in an electrolyte after formation (%) | Capacity retention rate at 0.5C/0.5C for 300 circles (%) | Capacity retention rate after 30 days of storage at 60°C (%) | Whether a battery generates a gas after storage at 60°C for 30 days |
|---|---|---|---|---|---|---|---|---|---|---|---|---|---|---|
| Embodiment 31 | | 1.0 | 1.0 | 1.0 | 4.0 (hard carbon) | 0.25 | 1.0 | 0.25 | 10.0 (NFP) | 0.1 | 0.42 | 88.6 | 95.9 | No |
| Embodiment 32 | 2.0 | | 2.0 | 2.0 | 4.0 (hard carbon) | 0.5 | 1.0 | 0.5 | 10.0 (NFP) | 0.2 | 0.79 | 88.1 | 95.6 | No |
| Embodiment 33 | 1.0 | 1.0 | 2.0 | 5.0 | 3.0 (hard carbon) | 0.67 | 0.4 | 1.67 | 12.5 (NFP) | 0.16 | 2.18 | 86.2 | 94.7 | No |
| Embodiment 34 | 2.0 | 1.0 | 3.0 | 10.0 | 1.0 (soft carbon) | 3.0 | 0.3 | 10.0 | 15.0 (NFP) | 0.2 | 4.27 | 84.1 | 93.6 | No |
| Embodiment 35 | 0.08 | | 0.08 | 10.0 | 1.0 (soft carbon) | 0.08 | 0.008 | 10.0 | 0.5 (NFM) | 0.16 | 2.82 | 81.1 | 90.1 | No |
| Embodiment 36 | 2.0 | 0.8 | 2.8 | 0.3 | 0.8 (hard carbon) | 3.5 | 9.33 | 0.38 | 0.5 (NFM) | 5.6 | 0.08 | 81.7 | 90.7 | No |

(continued)

| | Content of a sodium salt additive A (%) | Content of a sodium salt additive B (%) | Total content of the sodium salt additives e (%) | Content of FEC in an original electrolyte f (%) | Specific surface area of a carbon materia 1 (m2/g) | e/a | e/f | f/a | Specific surface area of a positive electro active materia 1 (b, c, or d) (m2/g) | e/b, e/c, or e/d | Content of FEC in an electrolyte after formation (%) | Capacity retention rate at 0.5C/0.5C for 300 circles (%) | Capacity retention rate after 30 days of storage at 60°C (%) | Whether a battery generates a gas after storage at 60°C for 30 days |
|---|---|---|---|---|---|---|---|---|---|---|---|---|---|---|
| Embodiment 37 | 0.5 | | 0.5 | 2.0 | 2.0 (hard carbon) | 0.25 | 0.25 | 1.0 | 0.5 (NFM) | 1.0 | 0.98 | 87.9 | 96.8 | No |
| Embodiment 38 | 0.5 | | 0.5 | 2.0 | 2.0 (hard carbon) | 0.25 | 0.25 | 1.0 | 0.5 (NFM) | 1.0 | 1.05 | 88.1 | 96.7 | No |
| Embodiment 39 | 0.5 | | 0.5 | 2.0 | 2.0 (hard carbon) | 0.25 | 0.25 | 1.0 | 0.5 (NFM) | 1.0 | 0.96 | 87.5 | 96.2 | No |
| Embodiment 40 | 0.08 | | 0.08 | 2.0 | 2.0 (hard carbon) | 0.04 | 0.04 | 1.0 | 1.0 (NFM) | 0.08 | 0.57 | 82.3 | 91.3 | No |
| Embodiment 41 | 2.5 | | 2.5 | 2.0 | 2.0 (hard carbon) | 1.25 | 1.25 | 1.0 | 0.15 (NFM) | 16.67 | 1.05 | 82.5 | 91.8 | No |
| Comparative example 1 | | | | 2.0 | 2.0 (hard carbon) | | | 1.0 | 0.5 (NFM) | | 0.37 | 70.2 | 85.1 | Yes |

20

| | Content of a sodium salt additive A (%) | Content of a sodium salt additive B (%) | Total content of the sodium salt additives e (%) | Content of FEC in an original electrolyte f (%) | Specifice surface area a of a carbon materia 1 (m²/g) | e/a | e/f | f/a | Specific surface area of a positive electrode active materia 1 (b, c, or d) (m²/g) | e/b, e/c, or e/d | Content of FEC in an electrolyte after formation (%) | Capacity retention rate at 0.5C/0.5C for 300 circles (%) | Capacity retention rate after 30 days of storage at 60° C (%) | Whether a battery generates a gas after storage at 60°C for 30 days |
|---|---|---|---|---|---|---|---|---|---|---|---|---|---|---|
| Comparative example 2 | | 0.02 | 0.02 | 1.0 | 5.0 (hard carbon) | 0.004 | 0.02 | 0.2 | 0.5 (NFM) | 0.04 | 0.18 | 76.4 | 87.6 | Yes |
| Comparative example 3 | 0.05 | | 0.05 | 0.2 | 5.0 (hard carbon) | 0.01 | 0.25 | 0.04 | 0.5 (NFM) | 0.1 | 0 | 78.6 | 88.5 | Yes |
| Comparative example 4 | 0.01 | 0.01 | 0.02 | 2.0 | 3.0 (hard carbon) | 0.007 | 0.01 | 0.67 | 0.5 (NFM) | 0.04 | 0.46 | 75.7 | 86.5 | Yes |
| Comparative example 5 | | 0.02 | 0.02 | 1.0 | 3.0 (soft carbon) | 0.007 | 0.02 | 0.33 | 0.5 (NFM) | 0.04 | 0.23 | 75.6 | 86.3 | Yes |

| | Content of a sodium salt additive A (%) | Content of a sodium salt additive B (%) | Total content of the sodium salt additives e (%) | Content of FEC in an original electrolyte f (%) | Specifice surface area a of a carbon materia 1 (m²/g) | e/a | e/f | f/a | Specific surface area of a positive electrode active materia 1 (b, c, or d) (m²/g) | e/b, e/c, or e/d | Content of FEC in an electrolyte after formation (%) | Capacity retention rate at 0.5C/0.5C for 300 circles (%) | Capacity retention rate after 30 days of storage at 60°C (%) | Whether a battery generates a gas after storage at 60°C for 30 days |
|---|---|---|---|---|---|---|---|---|---|---|---|---|---|---|
| Comparative example 6 | 2.0 | 1.0 | 3.0 | 0.6 | 0.8 (hard carbon) | 3.75 | 5.0 | 0.75 | 0.5 (NFM) | 6.0 | 0.09 | 73.8 | 85.9 | Yes |
| Comparative example 7 | | 0.02 | 0.02 | 1.0 | 5.0 (hard carbon) | 0.004 | 0.02 | 0.2 | 0.8 (PBA) | 0.025 | 0.17 | 75.5 | 86.1 | Yes |
| Comparative example 8 | 0.02 | | 0.02 | 1.0 | 5.0 (hard carbon) | 0.004 | 0.02 | 0.2 | 0.8 (PBA) | 0.025 | 0.15 | 76.1 | 87.2 | Yes |
| Comparative example 9 | | 0.01 | 0.01 | 1.0 | 2.0 (soft carbon) | 0.005 | 0.01 | 0.5 | 0.5 (PBA) | 0.02 | 0.18 | 75.8 | 85.2 | Yes |

EP 4 718 563 A1

(continued)

| | Content of a sodium salt additive A (%) | Content of a sodium salt additive B (%) | Total content of the sodium salt additives e (%) | Content of FEC in an original electrolyte f (%) | Specific surface area a of a carbon materia 1 (m²/g) | e/a | e/f | f/a | Specific surface area of a positive electrode active materia 1 (b, c, or d) (m²/g) | e/b, e/c, or e/d | Content of FEC in an electrolyte after formation (%) | Capacity retention rate at 0.5C/0.5C for 300 circles (%) | Capacity retention rate after 30 days of storage at 60°C (%) | Whether a battery generates a gas after storage at 60°C for 30 days |
|---|---|---|---|---|---|---|---|---|---|---|---|---|---|---|
| Comparative example 10 | | | | 1.0 | 4.0 (hard carbon) | | | 0.25 | 10.0 (NFP) | | 0.12 | 75.2 | 85.3 | Yes |
| Comparative example 11 | | 0.01 | 0.01 | 1.0 | 4.0 (hard carbon) | 0.003 | 0.01 | 0.25 | 10.0 (NFP) | 0.001 | 0.15 | 78.7 | 87.4 | Yes |
| Comparative example 12 | 0.01 | | 0.01 | 2.0 | 4.0 (hard carbon) | 0.003 | 0.005 | 0.5 | 10.0 (NFP) | 0.001 | 0.41 | 77.6 | 87.6 | Yes |
| Comparative example 13 | 2.0 | 1.0 | 3.0 | 15.0 | 1.0 (soft carbon) | 3.0 | 0.2 | 15.0 | 10.0 (NFP) | 0.3 | 8.16 | 71.8 | 85.6 | Yes |

23

EP 4 718 563 A1

It can be seen from the results in Table 1 that cycle performance of the sodium-ion batteries prepared in Embodiments 1 to 41 of this application is significantly better than that of the sodium-ion batteries prepared in Comparative examples 1 to 13.

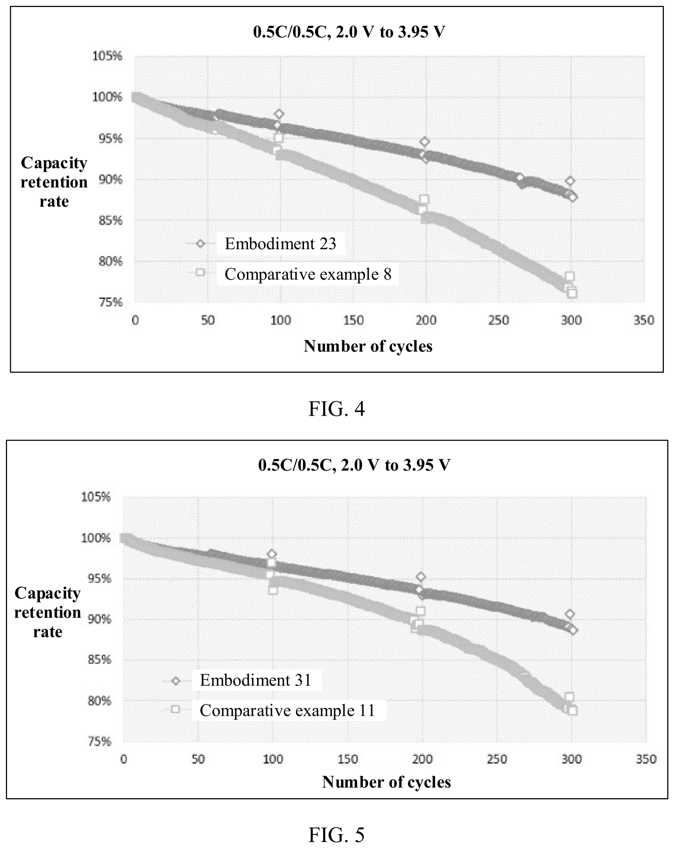

FIG. 3 is a diagram of comparison between cycle performance of sodium-ion batteries in Embodiment 3 and Comparative example 2 after 300 cycles at 0.5C/0.5C. FIG. 4 is a diagram of comparison between cycle performance of sodium-ion batteries in Embodiment 23 and Comparative example 8 after 300 cycles at 0.5C/0.5C. FIG. 5 is a diagram of comparison between cycle performance of sodium-ion batteries in Embodiment 31 and Comparative example 11 after 300 cycles at 0.5C/0.5C.

(1) It can be seen from the results in Table 1 and FIG. 3 to FIG. 5 that, in each of the sodium-ion batteries prepared in Embodiment 1 to Embodiment 41 of this application, an appropriate amount of FEC additive and an appropriate amount of sodium salt additive are added when the electrolyte is prepared, and an appropriate amount of FEC is retained in the electrolyte after battery formation. The obtained sodium-ion battery has a capacity retention rate of 81.1% to 90.6% after 300 cycles at 0.5C/0.5C, and a capacity retention rate of 90.1% to 96.8% after storage at 60°C for 30 days, which are significantly higher than a capacity retention rate of 70.2% to 75.2% after 300 cycles at 0.5C/0.5C and a capacity retention rate of 85.1% to 85.3% after storage at 60°C for 30 days of the sodium-ion battery (Comparative example 1 or Comparative example 10) obtained without adding the sodium salt additive to the electrolyte. A reason is as follows: The FEC additive and the sodium salt additive are competitively combined on a surface of a hard carbon/soft carbon negative electrode to form a better SEI film in a battery formation process, and the appropriate amount of FEC is retained in the electrolyte after formation. This helps repair a broken SEI film in a cycle process, and helps form a CEI film on a surface of a positive electrode, thereby improving cycle performance of the sodium-ion battery.

(2) In comparison between Embodiments 1 to 21 and Comparative examples 1 to 6 in which positive electrode active materials are $NaNi_{1/3}Fe_{1/3}Mn_{1/3}O_2$ (NFM), when an FEC, a specific surface area a of the hard carbon/soft carbon, and a specific surface area b of the positive electrode material NFM are fixed, a ratio e/a of a mass percentage e of the sodium salt additive in the electrolyte to the specific surface area a of the hard carbon/soft carbon, a ratio f/a of a mass percentage f of fluorocarbonate in the electrolyte to the specific surface area a of the hard carbon/soft carbon, a ratio e/f of the mass percentage e of the sodium salt additive in the electrolyte to the mass percentage f of the fluorocarbonate in the electrolyte, and/or a ratio e/b of the mass percentage e of the sodium salt additive in the electrolyte to the specific surface area b of the material NFM fall/falls within an appropriate range. This can significantly improve cycle performance and high-temperature storage performance of the battery. A reason is as follows: Contents of the sodium salt additive and the organic additive in the electrolyte are controlled within an appropriate range based on the specific surface area of the negative electrode active material. This helps form a high-quality CEI film and SEI film on the surfaces of the positive and negative electrodes respectively, effectively reduces a side reaction between the electrolyte and the electrode material, suppresses dissolution of metal ions in the positive electrode material, reduces an internal resistance, controls a consumption amount and a consumption speed of the additive, finally prolongs cycle life of the battery, and finally improves storage performance of the battery.

For example, in comparison, each of the sodium-ion batteries provided in Embodiment 3 and Comparative example 2 is added with 1.0% of FEC in the electrolyte. However, during electrolyte preparation, the sodium-ion battery provided in Embodiment 3 is further added with a sodium salt additive $NaPO_2F_2$ with a mass percentage of 1.0% in the electrolyte, and e/a=0.2, f/a=0.2, e/f=1.0, and e/b=2.0 are maintained. In the sodium-ion battery obtained through formation in Embodiment 3, the mass percentage of the FEC in the electrolyte is 0.58%; and the finally obtained sodium-ion battery has the capacity retention rate of 89.3% after 300 cycles at 0.5C/0.5C, and the capacity retention rate of 96.6% after storage at 60°C for 30 days. However, in Comparative example 2, only a sodium salt additive $NaPO_2F_2$ with a mass percentage of 0.02% is added to the electrolyte. In this case, e/a=0.004, f/a=0.2, e/f=0.02, and e/b=0.04. In the sodium-ion battery obtained through formation, the mass percentage of the FEC in the electrolyte is only 0.18%, and the finally obtained sodium-ion battery has the capacity retention rate of 76.4% after 300 cycles at 0.5C/0.5C, and the capacity retention rate of 87.6% after storage at 60°C for 30 days, which are significantly lower than those in Embodiment 3. It can be seen through comparison between the sodium-ion batteries provided in Embodiment 3 (e/a=0.2, e/b=2.0) and Comparative example 2 (e/a=0.004, e/b=0.04) that when e/a<0.01 and e/b<0.1, the sodium salt additive has an excessively low content, and cannot effectively passivate the surface of the hard carbon negative electrode. As a result, the fluorocarbonate (FEC) is excessively consumed for film formation through formation, and a side reaction at a later stage of battery cycling cannot be effectively suppressed. Therefore, although the sodium-ion battery in Comparative example 2 is added with both the sodium salt additive and the FEC in the electrolyte, cycle performance and high-temperature storage performance of the battery are not greatly improved.

For example, it can be seen through comparison between the sodium-ion batteries provided in Embodiment 9 and Comparative example 3 that, even if both the sodium salt additive and the FEC are added to the electrolyte in Comparative example 3, because the ratio f/a of the mass percentage f of the fluorocarbonate in the electrolyte to the specific surface area a of the hard carbon is less than 0.05, and an addition amount of the fluorocarbonate is smaller, the battery in Comparative example 3 cannot obtain high cycle performance and high-temperature storage performance.

For example, it can be seen through comparison between the sodium-ion batteries provided in Embodiment 17 and Comparative example 6 that, even if both the sodium salt additive and the FEC are added to the electrolyte in Comparative example 6, because the ratio e/a of the mass percentage e of the sodium salt additive in the electrolyte to the specific surface area a of the hard carbon is greater than 3.5, and an addition amount of the sodium salt additive is larger, the battery in Comparative example 6 cannot obtain high cycle performance and high-temperature storage performance.

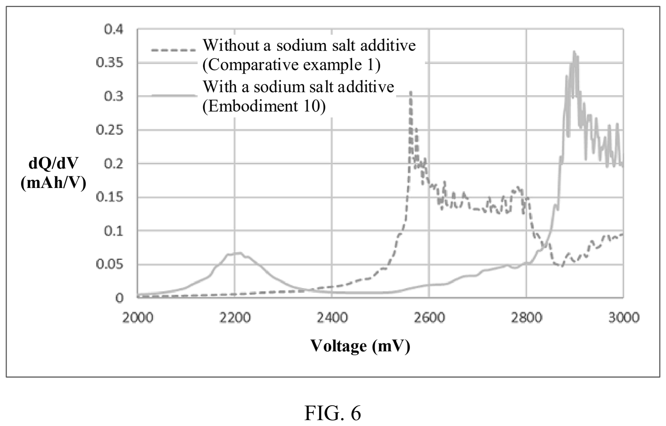

The sodium-ion batteries in Embodiment 10 and Comparative example 1 are charged at 45°C at 0.05C to 3.1 V for hot-pressing formation, voltage and capacity data in the charging process are read, and the capacity is differentiated with respect to the voltage to obtain dQ/dV data. FIG. 6 shows film formation potentials of the sodium-ion batteries, where a horizontal coordinate indicates the voltage and a vertical coordinate indicates the dQ/dV data. It can be seen from FIG. 6 that a new peak appears at about 2200 mV. It indicates that NaDFOB may form a film on the surface of the hard carbon negative electrode material before FEC.

(3) In comparison between Embodiments 22 to 30 and Comparative examples 7 to 9 in which positive electrode active materials are $Na_2Mn[Fe(CN)_6]$ (PBA), when an FEC, a specific surface area a of the hard carbon/soft carbon, and a specific surface area c of the positive electrode material PBA are fixed, a ratio e/a of a mass percentage e of the sodium salt additive in the electrolyte to the specific surface area a of the hard carbon/soft carbon, a ratio f/a of a mass percentage f of fluorocarbonate in the electrolyte to the specific surface area a of the hard carbon/soft carbon, a ratio e/f of the mass percentage e of the sodium salt additive in the electrolyte to the mass percentage f of the fluorocarbonate in the electrolyte, and/or a ratio e/c of the mass percentage e of the sodium salt additive in the electrolyte to the specific surface area c of the material PBA fall/falls within an appropriate range. This can significantly improve cycle performance and high-temperature storage performance of the battery. A reason is as follows: Contents of the sodium salt additive and the organic additive in the electrolyte are controlled within an appropriate range based on the specific surface area of the negative electrode active material. This helps form a high-quality CEI film and SEI film on the surfaces of the positive and negative electrodes respectively, effectively reduces a side reaction between the electrolyte and the electrode material, suppresses dissolution of metal ions in the positive electrode material, reduces an internal resistance, controls a consumption amount and a consumption speed of the additive, finally prolongs cycle life of the battery, and finally improves storage performance of the battery.

Specifically, in comparison, each of the sodium-ion batteries provided in Embodiment 23 and Comparative example 8 is added with 1% of FEC in the electrolyte. However, during electrolyte preparation, the sodium-ion battery provided in Embodiment 23 is further added with a sodium salt additive NaDFOB with a mass percentage of 1.0% in the electrolyte, and e/a=0.2, f/a=0.2, e/f=1.0, and e/c=1.25 are maintained. In the sodium-ion battery obtained through formation in Embodiment 23, the mass percentage of the FEC in the electrolyte is 0.45%; and the finally obtained sodium-ion battery has the capacity retention rate of 87.9% after 300 cycles at 0.5C/0.5C, and the capacity retention rate of 95.3% after storage at 60°C for 30 days. However, in Comparative example 8, only a sodium salt additive NaDFOB with a mass percentage of 0.02% is added to the electrolyte. In this case, e/a=0.004, f/a=0.2, e/f=0.02, and e/c=0.025. In the sodium-ion battery obtained through formation, the mass percentage of the FEC in the electrolyte is only 0.15%, and the finally obtained sodium-ion battery has the capacity retention rate of 76.1% after 300 cycles at 0.5C/0.5C, and the capacity retention rate of 87.2% after storage at 60°C for 30 days, which are significantly lower than those in Embodiment 23. It can be seen through comparison between the sodium-ion batteries provided in Embodiment 23 (e/a=0.2, e/c=1.25) and Comparative example 8 (e/a=0.004, e/c=0.025) that when e/a<0.01 and e/c<0.1, the sodium salt additive has an excessively low content, and cannot effectively passivate the surface of the hard carbon negative electrode. As a result, the fluorocarbonate (FEC) is excessively consumed for film formation through formation, and a side reaction at a later stage of battery cycling cannot be effectively suppressed. Therefore, although the sodium-ion battery in Comparative example 8 is added with both the sodium salt additive and the FEC in the electrolyte, cycle performance and high-temperature storage performance of the battery are not greatly improved.

(4) In comparison between Embodiments 31 to 34 and Comparative examples 10 to 13 in which positive electrode active materials are $NaFePO_4$ (NFP), when an FEC, a specific surface area a of the hard carbon/soft carbon, and a specific surface area d of the positive electrode material NFP are fixed, a ratio e/a of a mass percentage e of the sodium salt additive in the electrolyte to the specific surface area a of the hard carbon/soft carbon, a ratio f/a of a mass percentage f of fluorocarbonate in the electrolyte to the specific surface area a of the hard carbon/soft carbon, a ratio e/f of the mass percentage e of the sodium salt additive in the electrolyte to the mass percentage f of the fluorocarbonate in the electrolyte, and/or a ratio e/d of the mass percentage e of the sodium salt additive in the electrolyte to the specific surface area d of the material NFP fall/falls within an appropriate range. This can significantly improve cycle performance and high-temperature storage performance of the battery. A reason is as follows: Contents of the sodium salt additive and the organic additive in the electrolyte are controlled within an appropriate range based on the specific surface area of the negative electrode active material. This helps form a high-quality CEI film and SEI film on the surfaces of the positive and negative electrodes respectively, effectively reduces a side reaction between the electrolyte and the electrode material, suppresses dissolution of metal ions in the positive electrode material, reduces an internal resistance, controls a consumption amount and a consumption speed of the additive, finally prolongs cycle life of the battery, and finally improves storage performance of the battery.

For example, in comparison, each of the sodium-ion batteries provided in Embodiment 31 and Comparative example 11 is added with 1% of FEC in electrolyte. However, during electrolyte preparation, the sodium-ion battery provided in Embodiment 31 is further added with a sodium salt additive $NaPO_2F_2$ with a mass percentage of 1.0% in the electrolyte. In this case, e/a=0.25, f/a=0.25, e/f=1.0, and e/d=0.1. In the sodium-ion battery obtained through formation in Embodiment 31, the mass percentage of the FEC in the electrolyte is 0.42%; and the finally obtained sodium-ion battery has the capacity retention rate of 88.6% after 300 cycles at 0.5C/0.5C, and the capacity retention rate of 95.9% after storage at 60°C for 30 days. However, in Comparative example 11, only a sodium salt additive $NaPO_2F_2$ with a mass percentage of 0.01% is added to the electrolyte. In this case, e/a=0.0025, f/a=0.25, e/f=0.01, and e/d=0.001. In the sodium-ion battery obtained through formation, the mass percentage of the FEC in the electrolyte is only 0.15%, and the finally obtained sodium-ion battery has the capacity retention rate of 78.7% after 300 cycles at 0.5C/0.5C, and the capacity retention rate of 87.4% after storage at 60°C for 30 days, which are significantly lower than those in Embodiment 31. It can be seen through comparison between the sodium-ion batteries provided in Embodiment 31 (e/a=0.25, e/d=0.1) and Comparative example 11 (e/a=0.0025, e/d=0.001) that when e/a<0.01 and e/d<0.005, the sodium salt additive has an excessively low content, and cannot effectively passivate the surface of the hard carbon negative electrode. As a result, the fluorocarbonate (FEC) is excessively consumed for film formation through formation, and a side reaction at a later stage of battery cycling cannot be effectively suppressed. Therefore, although the sodium-ion battery in Comparative example 11 is added with both the sodium salt additive and the FEC in the electrolyte, cycle performance and high-temperature storage performance of the battery are not greatly improved.

For example, it can be seen through comparison between the sodium-ion batteries provided in Embodiment 14 and Comparative example 13 that, even if both the sodium salt additive and the FEC are added to the electrolyte in Comparative example 13, because the ratio f/a of the mass percentage f of the fluorocarbonate in the electrolyte to the specific surface area a of the soft carbon is greater than 10.0, and an addition amount of the fluorocarbonate is larger, the battery in Comparative example 13 cannot obtain high cycle performance and high-temperature storage performance.

(5) In comparison, each of the sodium-ion batteries provided in Embodiment 35 and Embodiment 14 is added with 10.0% of FEC in the electrolyte. However, during electrolyte preparation, the sodium-ion battery provided in Embodiment 14 is added with a sodium salt additive NaDFOB with a mass percentage of 3.0% in the electrolyte, and e/a=3.0, f/a=10.0, e/f=0.3, and e/b=6.0 are maintained. In the sodium-ion battery obtained through formation in Embodiment 14, the mass percentage of the FEC in the electrolyte is 4.96%; and the finally obtained sodium-ion battery has the capacity retention rate of 85.1% after 300 cycles at 0.5C/0.5C, and the capacity retention rate of 93.2% after storage at 60°C for 30 days. However, in Embodiment 35, a sodium salt additive NaDFOB with a mass percentage of 0.08% is added to the electrolyte. In this case, e/a=0.08, f/a=10.0, e/f=0.008, and e/b=0.16. In the sodium-ion battery obtained through formation, the mass percentage of the FEC in the electrolyte is 2.82%, and the finally obtained sodium-ion battery has the capacity retention rate of 81.1% after 300 cycles at 0.5C/0.5C, and the capacity retention rate of 90.1% after storage at 60°C for 30 days, which are lower than those in Embodiment 14. It can be seen through comparison between the sodium-ion batteries provided in Embodiment 14 (e/f=0.3) and Embodiment 35 (e/f=0.008) that when e/f is controlled to be greater than 0.01, improvement of cycle performance and high-temperature storage performance of the battery is facilitated.

In comparison, each of the sodium-ion batteries provided in Embodiment 36 and Embodiment 17 is added with 2.8% of sodium salt additive in the electrolyte. However, during electrolyte preparation, the sodium-ion battery provided in Embodiment 17 is added with an organic additive FEC with a mass percentage of 0.6% in the electrolyte, and e/a=3.5, e/f=4.67, f/a=0.75, and e/b=5.6 are maintained. In the sodium-ion battery obtained through formation in Embodiment 17, the mass percentage of the FEC in the electrolyte is 0.27%; and the finally obtained sodium-ion battery has the capacity retention rate of 84.6% after 300 cycles at 0.5C/0.5C, and the capacity retention rate of 94.3% after storage at 60°C for 30 days. However, in Embodiment 36, an organic additive FEC with a mass percentage of 0.3% is added to the electrolyte. In this case, e/a=3.5, e/f=9.33, f/a=0.38, and e/b=5.6. In the sodium-ion battery obtained through formation, the mass percentage of the FEC in the electrolyte is 0.08%, and the finally obtained sodium-ion battery has the capacity retention rate of 81.7% after 300 cycles at 0.5C/0.5C, and the capacity retention rate of 90.7% after storage at 60°C for 30 days, which are lower than those in Embodiment 17. It can be seen through comparison between the sodium-ion batteries provided in Embodiment 17 (e/f=4.67) and Embodiment 35 (e/f=9.33) that when e/f is controlled to be less than or equal to 8.0, improvement of cycle performance and high-temperature storage performance of the battery is facilitated.

(6) In comparison, each of the sodium-ion batteries provided in Embodiments 37 to 39 and Embodiment 10 is added with 2.0% of organic additive FEC and 0.5% of sodium salt additive NaDFOB in the electrolyte. However, during electrolyte preparation, the sodium-ion batteries provided by Embodiments 37 to 39 are respectively added with PS with a mass percentage of 2% (Embodiment 37), DENE with a mass percentage of 2% (Embodiment 38), and SA with a mass percentage of 0.1% (Embodiment 39) in the electrolyte, and e/a=0.25, e/f=0.25, f/a=1.0, and e/b=1.0 are maintained. The capacity retention rate after 300 cycles at 0.5C/0.5C and the capacity retention rate after storage at 60°C for 30 days of the sodium-ion batteries obtained in Embodiments 37 to 39 are slightly higher than those in Embodiment 10. It indicates that addition of an appropriate amount of sulfur-containing ester compound, nitrile compound, and acid anhydride compound helps further improve cycle performance and high-temperature storage performance of the battery.

(7) In comparison, each of the sodium-ion batteries provided in Embodiment 40 and Embodiment 10 is added with 2.0% of organic additive FEC in the electrolyte. However, during electrolyte preparation, the sodium-ion battery provided in Embodiment 10 is added with a sodium salt additive NaDFOB with a mass percentage of 0.5% in the electrolyte, and e/a=0.25, e/f=0.25, f/a=1.0, and e/b=1.0 are maintained. In the sodium-ion battery obtained through formation in Embodiment 10, the mass percentage of the FEC in the electrolyte is 0.95%; and the finally obtained sodium-ion battery has the capacity retention rate of 86.8% after 300 cycles at 0.5C/0.5C, and the capacity retention rate of 95.2% after storage at 60°C for 30 days. However, in Embodiment 40, a sodium salt additive NaDFOB with a mass percentage of 0.08% is added to the electrolyte. In this case, e/a=0.04, e/f=0.04, f/a=1.0, and e/b=0.08. In the sodium-ion battery obtained through formation, the mass percentage of the FEC in the electrolyte is 0.57%, and the finally obtained sodium-ion battery has the capacity retention rate of 82.3% after 300 cycles at 0.5C/0.5C, and the capacity retention rate of 91.3% after storage at 60°C for 30 days, which are lower than those in Embodiment 10. It can be seen through comparison between the sodium-ion batteries provided in Embodiment 10 (e/b=1.0) and Embodiment 40 (e/b=0.08) that when e/b is controlled to be greater than 0.1, improvement of cycle performance and high-temperature storage performance of the battery is facilitated.

(8) In comparison, each of the sodium-ion batteries provided in Embodiment 41 and Embodiment 10 is added with 2.0% of organic additive FEC in the electrolyte. However, during electrolyte preparation, the sodium-ion battery provided in Embodiment 10 is added with a sodium salt additive NaDFOB with a mass percentage of 0.5% in the electrolyte, and e/a=0.25, e/f=0.25, f/a=1.0, and e/b=1.0 are maintained. In the sodium-ion battery obtained through formation in Embodiment 10, the mass percentage of the FEC in the electrolyte is 0.95%; and the finally obtained sodium-ion battery has the capacity retention rate of 86.8% after 300 cycles at 0.5C/0.5C, and the capacity retention rate of 95.2% after storage at 60°C for 30 days. However, in Embodiment 41, a sodium salt additive NaDFOB with a mass percentage of 2.5% is added to the electrolyte. In this case, e/a=1.25, e/f=1.25, f/a=1.0, and e/b=16.67. In the sodium-ion battery obtained through formation, the mass percentage of the FEC in the electrolyte is 1.05%, and the finally obtained sodium-ion battery has the capacity retention rate of 82.5% after 300 cycles at 0.5C/0.5C, and the capacity retention rate of 91.8% after storage at 60°C for 30 days, which are lower than those in Embodiment 10. It can be seen through comparison between the sodium-ion batteries provided in Embodiment 10 (e/b=1.0) and Embodiment 41 (e/b=16.67) that when e/b is controlled to be less than or equal to 15.0, improvement of cycle performance and high-temperature storage performance of the battery is facilitated.

In conclusion, both the sodium salt additive and the organic additive are added to the electrolyte of the sodium-ion battery, and the sodium salt additive and the organic additive are controlled to appropriate contents based on the specific surface area of the negative electrode carbon material, so that the capacity retention rate after 300 cycles at 0.5C/0.5C and the capacity retention rate after storage at 60°C for 30 days of the sodium-ion battery can be increased.

It should be understood that "first", "second", and various numbers in this specification are merely used for differentiation for ease of description, but are not intended to limit the scope of this application.

In this application, "and/or" describes an association relationship between associated objects, and indicates that three relationships may exist. For example, A and/or B may indicate the following three cases: Only A exists, both A and B exist, and only B exists, where A and B may be singular or plural. A character "/" generally indicates an "or" relationship between associated objects.

In this application, "at least one" means one or more, and "a plurality of" means two or more. "At least one of the following items (pieces)" or a similar expression thereof means any combination of these items, including a singular item (piece) or any combination of plural items (pieces). For example, "at least one item (piece) of a, b, or c", or "at least one item (piece) of a, b, and c" may indicate: a, b, c, a-b (namely, a and b), a-c, b-c, or a-b-c, where a, b, and c may be singular or plural.

In this application, "-" indicates a range value, including endpoint values at two ends. For example, a value of a may be 0.5-15. It indicates that the value of a may range from 0.5 to 15, and endpoint values 0.5 and 15 are included.

It should be understood that sequence numbers of the foregoing processes do not mean an execution sequence in various embodiments of this application. A part or all of the steps may be performed in parallel or in sequence. The execution sequence of the processes should be determined based on functions and internal logic of the processes, and should not be construed as any limitation on the implementation processes of embodiments of this application.

**Claims**

1. A sodium-ion battery, wherein the sodium-ion battery comprises a positive electrode, a negative electrode, an electrolyte, and a separator, wherein the negative electrode comprises a negative electrode active material, the negative electrode active material comprises a carbon material, a specific surface area of the carbon material is a in a unit of $m^2/g$, the electrolyte comprises an electrolyte salt, an organic solvent, and an additive, the additive comprises a sodium salt additive and an organic additive, a mass percentage of the sodium salt additive in the electrolyte is e in a unit of %, a numerical ratio of e to a satisfies: $0.01 \leq e/a \leq 3.5$, a mass percentage of the organic additive in the electrolyte is f in a unit of %, and a numerical ratio of f to a satisfies:

$$0.05 \leq f/a \leq 10.$$

2. The sodium-ion battery according to claim 1, wherein the mass percentage of the sodium salt additive in the electrolyte ranges from 0.05% to 3%.

3. The sodium-ion battery according to claim 1 or 2, wherein the organic additive comprises fluorocarbonate, and a mass percentage of the fluorocarbonate in the electrolyte ranges from 0.1% to 10%.

4. The sodium-ion battery according to any one of claims 1 to 3, wherein a numerical ratio of e to f satisfies: $0.01 \leq e/f \leq 8$.

5. The sodium-ion battery according to any one of claims 1 to 4, wherein the specific surface area of the carbon material ranges from 0.5 $m^2/g$ to 15 $m^2/g$.

6. The sodium-ion battery according to any one of claims 1 to 5, wherein the sodium salt additive comprises one or more of sodium bis(oxalato)borate, sodium difluoro(oxalato)borate, sodium difluorodioxalate phosphate, and sodium difluorophosphate.

7. The sodium-ion battery according to claim 3, wherein the fluorocarbonate comprises at least one of fluoroethylene carbonate and difluoroethylene carbonate.

8. The sodium-ion battery according to any one of claims 1 to 7, wherein the positive electrode comprises a positive electrode active material, and the positive electrode active material comprises at least one of a layered sodium transition metal oxide, a Prussian blue (white) compound, and a sodium polyanion compound.

9. The sodium-ion battery according to claim 8, wherein the positive electrode active material comprises the layered sodium transition metal oxide, a specific surface area of the layered sodium transition metal oxide ranges from 0.1 $m^2/g$ to 1.0 $m^2/g$, and is denoted as b, and a numerical ratio of e to b satisfies: $0.1 \leq e/b \leq 15$.

10. The sodium-ion battery according to claim 9, wherein a mass percentage of the layered sodium transition metal oxide in a positive electrode material layer is greater than or equal to 92%, a specific capacity of the layered sodium transition metal oxide material at 0.1C is greater than or equal to 100 mAh/g, and a compaction density of the positive electrode ranges from 2.9 $g/cm^3$ to 3.6 $g/cm^3$.

11. The sodium-ion battery according to claim 8, wherein the positive electrode active material comprises the Prussian blue (white) compound, a specific surface area of the Prussian blue (white) compound ranges from 0.1 $m^2/g$ to 1.0 $m^2/g$, and is denoted as c, and a numerical ratio of e to c satisfies: $0.1 \leq e/c \leq 15$.

12. The sodium-ion battery according to claim 11, wherein a mass percentage of the Prussian blue (white) compound in a positive electrode material layer is greater than or equal to 92%, a specific capacity of the Prussian blue (white) compound material at 0.1C is greater than or equal to 130 mAh/g, and a compaction density of the positive electrode ranges from 1.2 $g/cm^3$ to 1.8 $g/cm^3$.

13. The sodium-ion battery according to claim 8, wherein the positive electrode active material comprises the sodium polyanion compound, a specific surface area of the sodium polyanion compound ranges from 5 $m^2/g$ to 25 $m^2/g$, and is denoted as d, and a numerical ratio of e to d satisfies: $0.005 \leq e/d \leq 0.4$.

14. The sodium-ion battery according to claim 13, wherein a mass percentage of the sodium polyanion compound in a positive electrode material layer is greater than or equal to 92%, a specific capacity of the sodium polyanion compound material at 0.1C is greater than or equal to 100 mAh/g, and a compaction density of the positive electrode ranges from 1.8 g/cm$^3$ to 2.8 g/cm$^3$.

15. The sodium-ion battery according to any one of claims 1 to 14, wherein the carbon material comprises at least one of natural graphite, artificial graphite, a mesocarbon microbead, hard carbon, soft carbon, and a porous carbon material.

16. The sodium-ion battery according to any one of claims 1 to 15, wherein a mass percentage of the carbon material in a negative electrode material layer is greater than or equal to 93%, a specific capacity of the carbon material at 0.1C is greater than or equal to 230 mAh/g, and a compaction density of the negative electrode ranges from 0.9 g/cm$^3$ to 1.6 g/cm$^3$.

17. The sodium-ion battery according to any one of claims 1 to 16, wherein the electrolyte further comprises one or more of a sulfur-containing ester compound, a nitrile compound, and an acid anhydride compound.

18. The sodium-ion battery according to claim 17, wherein a mass percentage of the sulfur-containing ester compound in the electrolyte ranges from 1% to 5%, a mass percentage of the nitrile compound in the electrolyte ranges from 1% to 6%, and a mass percentage of the acid anhydride compound in the electrolyte ranges from 0.05% to 1%.

19. The sodium-ion battery according to claim 17 or 18, wherein the sulfur-containing ester compound comprises one or more of dimethyl sulfite, diethyl sulfite, vinyl sulfite, ethylene sulfate, propylene sulfate, methylene methanedisulfonate, 1,3-propanesultone, 1,3-propene sultone, 1,4-butane sultone, dimethyl sulfate, diethyl sulfate, and propane 1,2-cyclic sulfate.

20. The sodium-ion battery according to claim 17 or 18, wherein the nitrile compound comprises a mononitrile compound and/or a polynitrile compound, the mononitrile compound comprises at least one of acetonitrile and p-tolunitrile, and the polynitrile compound comprises one or more of succinonitrile, glutaronitrile, adiponitrile, 1,2-bis(2-cyanoethoxy) ethane, and 1,3,6-hexanetricarbonitrile.

21. The sodium-ion battery according to claim 17 or 18, wherein the acid anhydride compound comprises one or more of succinic anhydride, glutaric anhydride, adipic anhydride, maleic anhydride, and cyclic phosphoric anhydride.

22. The sodium-ion battery according to any one of claims 1 to 21, wherein the electrolyte salt comprises one or more of NaClO$_4$, NaBF$_4$, NaPF$_6$, NaAsF$_6$, NaCF$_3$SO$_3$, NaTDI, Na[(CF$_3$SO$_2$)$_2$N], Na[(FSO$_2$)$_2$N], and Na[(C$_m$F$_{2m+1}$SO$_2$)(C$_n$F$_{2n+1}$SO$_2$)N], wherein m and n are natural numbers.

23. The sodium-ion battery according to any one of claims 1 to 22, wherein a molar concentration of the electrolyte salt in the electrolyte ranges from 0.01 mol/L to 5.0 mol/L.

24. The sodium-ion battery according to any one of claims 1 to 23, wherein the organic solvent comprises one or more of a carbonate solvent, an ether solvent, and a carboxylate solvent.

25. A preparation method for a sodium-ion battery, comprising:

providing a positive electrode sheet, a negative electrode sheet, a separator, and an electrolyte, wherein the negative electrode sheet comprises a negative electrode active material, the negative electrode active material comprises a carbon material, a specific surface area of the carbon material is a in a unit of m$^2$/g, the electrolyte comprises an electrolyte salt, an organic solvent, and an additive, the additive comprises a sodium salt additive and an organic additive, a mass percentage of the sodium salt additive in the electrolyte is e in a unit of %, and a mass percentage of the organic additive in the electrolyte is f in a unit of %; and
a numerical ratio of e to a is controlled to satisfy: $0.01 \leq e/a \leq 3.5$, and a numerical ratio of f to a is controlled to satisfy: $0.05 \leq f/a \leq 10$; and
assembling the positive electrode sheet, the negative electrode sheet, the separator, and the electrolyte to obtain a sodium-ion battery.

26. A power consumption device, wherein the power consumption device comprises a housing, and an electronic element and a battery that are accommodated in the housing, wherein the battery supplies power to the electronic element, and the battery comprises the sodium-ion battery according to any one of claims 1 to 24 or the sodium-ion battery prepared by using the preparation method according to claim 25.

FIG. 1

200

FIG. 2

FIG. 3

FIG. 4

FIG. 5

FIG. 6

## INTERNATIONAL SEARCH REPORT

| International application No. |
| --- |
| **PCT/CN2024/095448** |

| | |
| --- | --- |
| **A.** | **CLASSIFICATION OF SUBJECT MATTER** |

H01M10/0567(2010.01)i; H01M10/054(2010.01)i; H01M10/42(2006.01)i

According to International Patent Classification (IPC) or to both national classification and IPC

| | |
| --- | --- |
| **B.** | **FIELDS SEARCHED** |

Minimum documentation searched (classification system followed by classification symbols)

IPC: H01M10/-

Documentation searched other than minimum documentation to the extent that such documents are included in the fields searched

Electronic data base consulted during the international search (name of data base and, where practicable, search terms used)

CNTXT, WPABSC, ENTXT, VEN, CNKI: 钠, 电池, 比表面积, 氟 s 碳酸 s 酯, 氟代碳酸乙烯酯, 氟代碳酸亚乙烯酯, 氟代环状碳酸乙烯酯, 副盐, 添加剂, 钠盐, 草酸硼酸钠, 草酸磷酸钠, 氟磷酸钠, BET, sodium, battery, FEC, Fluoroethylene carbonate

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 115911558 A (SHENZHEN CAPCHEM TECHNOLOGY CO., LTD.) 04 April 2023 (2023-04-04)<br>description, embodiment 7 | 1-17, 19, 22-26 |
| Y | CN 115911558 A (SHENZHEN CAPCHEM TECHNOLOGY CO., LTD.) 04 April 2023 (2023-04-04)<br>description, embodiment 7 | 18, 20-21 |
| X | CN 115458798 A (LIYANG ZHONGKE HAINA TECHNOLOGY CO., LTD.) 09 December 2022 (2022-12-09)<br>description, embodiment 3 | 1-17, 19, 22-26 |
| Y | CN 115458798 A (LIYANG ZHONGKE HAINA TECHNOLOGY CO., LTD.) 09 December 2022 (2022-12-09)<br>description, embodiment 3 | 18, 20-21 |
| Y | CN 107171021 A (CHINA ELECTRONIC NEW ENERGY (WUHAN) RESEARCH INSTITUTE CO., LTD.) 15 September 2017 (2017-09-15)<br>description, paragraphs 4-7 | 18, 20-21 |

| ☑ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 August 2024** | **21 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/095448** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 115472913 A (HENAN FAENLAITE NEW ENERGY SCIENCE & TECHNOLOGY CO., LTD.) 13 December 2022 (2022-12-13)<br>    description, embodiment 11 | 18, 20-21 |
| A | CN 115732683 A (SHENZHEN CAPCHEM TECHNOLOGY CO., LTD.) 03 March 2023 (2023-03-03)<br>    description, paragraphs 6-20 | 1-26 |
| A | CN 116231086 A (SHENZHEN CAPCHEM TECHNOLOGY CO., LTD.) 06 June 2023 (2023-06-06)<br>    description, paragraphs 6-16 | 1-26 |
| A | WO 2023000214 A1 (CONTEMPORARY AMPEREX TECHNOLOGY CO., LTD.) 26 January 2023 (2023-01-26)<br>    description, paragraphs 44-50 | 1-26 |

Form PCT/ISA/210 (second sheet) (July 2022)

INTERNATIONAL SEARCH REPORT
Information on patent family members

International application No.

**PCT/CN2024/095448**

| Patent document cited in search report | | | Publication date (day/month/year) | Patent family member(s) | | | Publication date (day/month/year) |
|---|---|---|---|---|---|---|---|
| CN | 115911558 | A | 04 April 2023 | WO | 2024120067 | A1 | 13 June 2024 |
| CN | 115458798 | A | 09 December 2022 | None | | | |
| CN | 107171021 | A | 15 September 2017 | None | | | |
| CN | 115472913 | A | 13 December 2022 | None | | | |
| CN | 115732683 | A | 03 March 2023 | None | | | |
| CN | 116231086 | A | 06 June 2023 | None | | | |
| WO | 2023000214 | A1 | 26 January 2023 | US | 2023043895 | A1 | 09 February 2023 |
| | | | | EP | 4148854 | A1 | 15 March 2023 |
| | | | | EP | 4148854 | A4 | 04 October 2023 |
| | | | | KR | 20230015309 | A | 31 January 2023 |
| | | | | JP | 2023537444 | A | 01 September 2023 |
| | | | | JP | 7469496 | B2 | 16 April 2024 |
| | | | | CN | 116420259 | A | 11 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310710192